(19) Europäisches Patentamt
European Patent Office
Office européen des brevets

(11) EP 1 734 079 B1

(12) EUROPEAN PATENT SPECIFICATION

(45) Date of publication and mention of the grant of the patent:
**20.01.2016 Bulletin 2016/03**

(21) Application number: **05721090.8**

(22) Date of filing: **18.03.2005**

(51) Int Cl.:
***C08L 101/10*** *(2006.01)* ***C08K 3/00*** *(2006.01)*
***C08K 5/09*** *(2006.01)* ***C08K 5/544*** *(2006.01)*

(86) International application number:
**PCT/JP2005/004903**

(87) International publication number:
**WO 2005/097906 (20.10.2005 Gazette 2005/42)**

# (54) SINGLE-COMPONENT CURABLE COMPOSITION

EINKOMPONENTIGE HÄRTBARE ZUSAMMENSETZUNG

COMPOSITION VULCANISABLE À SIMPLE COMPOSANT

(84) Designated Contracting States:
**AT BE BG CH CY CZ DE DK EE ES FI FR GB GR HU IE IS IT LI LT LU MC NL PL PT RO SE SI SK TR**

(30) Priority: **01.04.2004 JP 2004109022**

(43) Date of publication of application:
**20.12.2006 Bulletin 2006/51**

(73) Proprietor: **KANEKA CORPORATION**
**Osaka (JP)**

(72) Inventors:
- **OKAMOTO, Toshihiko.,**
  **Kaneka Corp.Takasago Plant**
  **Takasago-shi,Hyogo 6768688 (JP)**
- **WAKABAYASHI, Katsuyu.,**
  **Kaneka Corp.Takasago Plant**
  **Takasago-shi, Hyogo 6768688 (JP)**
- **KUSAKABE, Masato.,**
  **Kaneka Corp.Osaka Plant**
  **Settsu-shi, Osaka 5660072 (JP)**

(74) Representative: **Hart-Davis, Jason et al**
**Cabinet Beau de Loménie**
**158, rue de l'Université**
**75340 Paris Cedex 07 (FR)**

(56) References cited:

| | |
|---|---|
| **EP-A1- 1 624 027** | **EP-A2- 1 041 119** |
| **JP-A- 5 093 137** | **JP-A- 2000 313 814** |
| **JP-A- 2002 212 451** | **US-A- 4 472 551** |

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 734 079 B1

Printed by Jouve, 75001 PARIS (FR)

## Description

TECHNICAL FIELD

The present invention relates to a one package curable composition which comprises an organic polymer having a silicon-containing group (hereinafter referred also to as "a reactive silicon group" in some cases) which has a hydroxyl group or a hydrolysable group bonded to a silicon atom and is crosslinkable by forming a siloxane bond. Subject-matter of the present invention are one package curable compositions according to claims 1-11 as attached.

BACKGROUND ART

It has been known that an organic polymer comprising at least one reactive silicon-containing group in one molecule has a very particular property of crosslinking by forming a siloxane bond accompanied with, for example, hydrolysis of a reactive silicon group due to water etc. at a room temperature and accordingly giving a rubber-like cured product.

With respect to the reactive silicon group-containing organic polymer, a polyoxyalkylene polymer and a polyisobutylene polymer are disclosed in Japanese Kokai Publication Sho-52-73998, Japanese Kokai Publication Sho-63-6041 and the like and have already been produced industrially and used widely for uses as a sealant, an adhesive, paint and the like.

The curable composition comprising an organic polymer having a reactive silicon group is cured using a silanol condensation catalyst and an organotin catalyst having a carbon-tin bond, such as dibutyltin bis(acetylacetonate), is widely used in the case of the one package curable composition. However, recently, the toxicity of the organotin compound is pointed out and there is also a problem that if the organotin catalyst is used, the recovery and the creep resistance of the curable composition are inferior.

On the other hand, as described in Japanese Kokai Publication Sho-55-9669, Japanese Patent No. 3062626, and Japanese Kokai Publication Hei-6-322251, a stannous carboxylate is generally used as a silanol condensation catalyst of a two-pack type curable composition. Use of the stannous carboxylate gives a cured product with improved recovery and creep resistance. Japanese Kokai Publication Hei-5-117519, Japanese Kokai Publication Hei-8-413582, Japanese Kokai Publication Hei-5-39428, Japanese Kokai Publication 2001-342363, Japanese Kokai Publication 2000-313814, Japanese Kokai Publication 2002-285018, and Japanese Kokai Publication 2003-147220 disclose techniques of using various kinds of carboxylic acid metal salts or carboxylic acids as a silanol condensation catalyst. In these prior techniques, the compounds are mainly used as a catalyst for two-pack type curable compositions and no method using them as a catalyst for one package curable compositions (substantially containing no water) having self-adhesion is disclosed. Examples of using a carboxylic acid metal salt and no organotin catalyst as a catalyst for one package curable compositions having self-adhesion are described in Japanese Kokai Publication 2000-345054 and Japanese Kokai Publication 2003-206410. However, the inventors of the invention have found a problem that even if the compositions described in these prior techniques are used, practically applicable adhesion as a one package sealant and a one package adhesive cannot be obtained in some cases.

SUMMARY OF THE INVENTION

The invention has its object to provide a one package curable composition comprising an organic polymer having a reactive silicon group as a main component, which has good adhesion while containing an organotin-free catalyst.

Inventors of the invention have made intensive investigations to solve the above-mentioned problems and have found that with respect to a curable composition containing (A) a reactive silicon group-containing organic polymer, (B) a carboxylic acid metal salt and/or carboxylic acid, (C) a filler, and (D) an amino group-containing silane coupling agent, it is possible to obtain a one package curable composition with practically sufficient adhesion while containing an organotin-free catalyst, by producing the composition as a one package curable composition with the water content of 2, 000 ppm or lower and specifying the mole ratio of the component (A) and the component (B). Thus, they have now completed the present invention.

That is, the invention relates to
a one package curable composition according to claim 1 which comprises

(A) an organic polymer having a silicon-containing group capable of crosslinking by forming a siloxane bond,
(B) a carboxylic acid metal salt (b1) and/or a carboxylic acid (b2),
(C) a filler, and
(D) an amino group-containing silane coupling agent: and has the total amount of carbonyl group composing an acid group in the component (B) per 100 g of the component (A) of 0,5-11 mmol or lower; contains substantially no

organotin compound; and has the water content of 2,000 ppm or lower.

A preferable embodiment of the invention relates to the one package curable composition as described above wherein the component (B) is the carboxylic acid metal salt (b1) or the carboxylic acid (b2).

Another preferable embodiment of the invention relates to
the one package curable composition as described above
wherein the component (B) is the carboxylic acid metal salt (b1) and the carboxylic acid (b2).

The carboxylic acid metal salt of the component (b1) is a metal salt of a carboxylic acid of which the carbon atom adjacent to the carbonyl group composing an acid group is a quaternary carbon.

The carboxylic acid of the component (b2) is the carboxylic acid of which the carbon atom adjacent to the carbonyl group composing an acid group is a quaternary carbon.

Further, another preferable embodiment of the invention relates to
the one package curable composition as described in any of the above description
wherein the organic polymer of the component (A) is one or more polymers selected from the group consisting of a polyoxyalkylene polymer, a saturated hydrocarbon polymer, and a (meth)acrylic ester polymer.

Further, another preferable embodiment of the invention relates to
the one package curable composition as described above
wherein the polyoxyalkylene polymer is a polyoxypropylene polymer.

Further, another preferable embodiment of the invention relates to
the one package curable composition as described in any of the above description
wherein the organic polymer of the component (A) has a main chain skeleton containing a group represented by the general formula (1):

$$-NR^1-C(=O)- \qquad (1)$$

(wherein $R^1$ denotes a hydrogen atom or a substituted or unsubstituted organic group.)

Further, another preferable embodiment of the invention relates to
the one package curable composition as described in any of the above description
wherein the carboxylic acid metal salt of the component (b-2) is one or more species selected from tin carboxylate, lead carboxylate, bismuth carboxylate, potassium carboxylate, calcium carboxylate, barium carboxylate, titanium carboxylate, zirconium carboxylate, hafnium carboxylate, vanadium carboxylate, manganese carboxylate, iron carboxylate, cobalt carboxylate, nickel carboxylate, and cerium carboxylate.

Further, another preferable embodiment of the invention relates to
the one package curable composition as described above
wherein the component (b-2) is a tin carboxylate.

Further, another preferable embodiment of the invention relates to
the one package curable composition as described above
wherein the component (b-2) is a stannous carboxylate.

Further, another preferable embodiment of the invention relates to
the one package curable composition as described in any of the above description
which further comprises an amine compound as the component (E).

The one package curable composition of the invention is excellent in adhesion while containing an organotin-free catalyst.

## DETAILED DESCRIPTION OF THE INVENTION

Hereinafter, the invention will be described more in detail.

The reactive silicon group-containing organic polymer to be used in the present invention may have any main chain skeleton without any particular limit and may be various kinds of organic polymers having the following main skeletons.

In particular, there may be mentioned polyoxyalkylene polymers such as polyoxyethylene, polyoxypropylene, polyoxybutylene, polyoxytetramethylene, polyoxyethylene-polyoxypropylene copolymer, and polyoxypropylene-polyoxybutylene copolymer; hydrocarbon polymers such as ethylene-propylene copolymer, polyisobutylene, isobutylene-isoprene and the like copolymer, polychloroprene, polyisoprene, copolymer of isoprene or butadiene with acrylonitrile and/or styrene etc., polybutadiene, copolymer of isoprene or butadiene with acrylonitrile and styrene etc., and hydrogenated polyolefin copolymers obtained by hydrogenation of these polyolefin polymers; polyester polymers such as condensation polymers of dibasic acid such as adipic acid and glycol and ring-opening polymers of lactones; (meth) acrylic ester polymers obtained by radical polymerization of monomers such as ethyl (meth) acrylate and butyl (meth)acrylate etc.; vinyl polymers obtained by radical polymerization of monomers such as (meth) acrylic ester monomers, vinyl acetate, acrylonitrile and styrene etc.; graft polymers obtained by polymerization of vinyl monomers in the above-mentioned organic polymers; polysulfide polymers; polyamide polymers such as nylon 6 obtained by ring opening polymerization of ε-caprolactam, nylon 6,6 obtained by condensation polymerization of hexamethylenediamine and adipic acid, nylon 6, 10 obtained by condensation polymerization of hexamethylenediamine and sebacic acid, nylon 11 obtained by condensation polymerization of ε-aminoundecanoic acid, nylon 12 obtained by ring-opening polymerization of ε-aminolaurolactam, and copolymer nylon comprising two or more components of the above-mentioned nylons; polycarbonates produced by condensation polymerization of bisphenol A and carbonyl chloride etc.; diallyl phthalate polymers; and the like.

Saturated hydrocarbon polymers such as polyisobutylene, hydrogenated polyisoprene, and hydrogenated polybutadiene, polyoxyalkylene polymers, and (meth) acrylic ester polymers are more preferable since they have relatively low glass transition temperature and give cured products excellent in cold resistance.

The glass transition temperature of the organic polymer as the component (A) is not particularly limited, however it is preferably 20°C or lower, more preferably 0°C or lower, and further preferably -20°C or lower. If the glass transition temperature exceeds 20°C, the viscosity is higher in winter and in a cold area and the workability may be worsened in some cases and the cured product may be deteriorated in flexibility and elongation in some cases. The glass transition temperature is a value measured by DSC measurement.

Also, polyoxyalkylene polymers and (meth)acrylic ester polymers are particularly preferable since they have high moisture permeability and give excellent deep part curability and adhesion in the case where they are used for a one package composition and polyoxyalkylene polymers are most preferable.

The reactive silicon group to be contained in the reactive silicon group-containing organic polymer is a group having a hydroxyl or hydrolysable group bonded to a silicon atom and capable of crosslinking by forming a siloxane bond by reaction accelerated by a silanol condensation catalyst. The reactive silicon group may include a group represented by the general formula (2):

$$-(SiR^2_{2-b}X_bO)_m-SiR^3_{3-a}X_a \qquad (2)$$

(wherein $R^2$ and $R^3$ independently represent an alkyl group having 1 to 20 carbon atoms, an aryl group having 6 to 20 carbon atoms, an aralkyl group having 7 to 20 carbon atoms, or a triorganosiloxy group defined as $(R')_3SiO-$ (respective substituents R' are independently a substituted or unsubstituted hydrocarbon group having 1 to 20 carbon atoms); respective substituents X independently represent a hydroxyl or hydrolysable group; (a) denotes 0, 1, 2, or 3 and (b) denotes 0, 1, or 2 except the case both (a) and (b) are 0; and m denotes 0 or an integer of 1 to 19).

The hydrolysable group is not particularly limited and may include any conventionally known hydrolysable group. In particular, examples include a hydrogen atom, a halogen atom, an alkoxy, acyloxy, ketoxymate, amino, amido, acid amido, aminoxy, mercapto, alkenyloxy, and the like groups. Among them, a hydrogen atom, an alkoxy, acyloxy, keoxymate, amino, amido, aminoxy, mercapto, and alkenyloxy groups are preferable and in terms of moderate hydrolysability and handling easiness, an alkoxy group is particularly preferable.

One to three hydrolysable groups and hydroxyl groups may be bonded to one silicon atom and (a + m x b) is preferably in a range from 1 to 5. In the case where two or more hydrolysable groups and hydroxyl groups are bonded in the reactive silicon group, they may be same or different.

One or more silicon atoms are contained in the reactive silicon group and the number is preferably 20 or less in the case of silicon atoms bonded by siloxane bonds and the like.

Particularly, a reactive silicon group represented by the general formula (3):

$$-SiR^3_{3-c}X_c \qquad (3)$$

(wherein $R^3$ and X are defined as described above and (c) is an integer of 1 to 3) is preferable since it is made available.

Specific examples of $R^2$ and $R^3$ in the above-mentioned general formulae (2) and (3) are alkyl groups such as methyl group and ethyl group; cycloalkyl groups such as cyclohexyl group; aryl groups such as phenyl group; aralkyl groups such as benzyl group; and triorganosiloxy groups defined as $(R')_3SiO-$ (wherein R' denotes methyl, phenyl, or the like group). Among them, methyl group is particularly preferable.

Specific examples of the reactive silicon group include trimethoxysilyl group, triethoxysilyl group, triisopropoxysilyl group, dimethoxymethylsilyl group, diethoxymethylsilyl group, and diisopropoxymethylsilyl group. The reactive silicon group such as trimethoxysilyl group, triethoxysilyl group, and triisopropoxysilyl group having three hydrolysable groups on a silicon atom is preferable since high activity and good curability can be obtained. Accordingly, the curable composition with both of practically usable curability and adhesion while containing an organotin-free catalyst can be obtained by using, as the component (A), the organic polymer having the reactive silicon group containing three hydrolysable groups on a silicon atom and, as the component (B), the carboxylic acid metal salt and/or the carboxylic acid in

combination. In terms of the curability, trimethoxysilyl group and triethoxysilyl group are more preferable and trimethoxysilyl group is even more preferable. Further, the reactive silicon group containing three hydrolysable groups on a silicon atom is particularly preferable in terms of recovery, durability, and creep resistance of the curable composition to be obtained. From a viewpoint of storage stability, dimethoxymethylsilyl group is particularly preferable. Triethoxysilyl group is particularly preferable since the alcohol to be produced by hydrolysis of the reactive silicon group is ethanol and thus it is more safe.

Introduction of the reactive silicon group may be carried out by a conventionally known method. That is, the following methods may be employed.

(A) An organic polymer having an unsaturated group is obtained by causing reaction of an organic polymer having a functional group such as a hydroxyl group in a molecule with an organic compound having an active group reactive on the functional group and an unsaturated group. Alternatively, the organic polymer having an unsaturated group is obtained by copolymerization with an unsaturated group-containing epoxy compound. Successively, hydrosilylation is carried out by causing reaction of a reactive silicon group-containing hydrosilane on the obtained reaction product.

(B) A compound having a mercapto group and a reactive silicon group is reacted with the organic polymer having an unsaturated group obtained in the same manner as the method (A) .

(C) An organic polymer having a functional group such as a hydroxyl group, an epoxy group, and an isocyanate group in a molecule is reacted with a compound having a functional group reactive on the functional group and a reactive silicon group.

The method described as the method (A) and the method of causing reaction of a polymer having a terminal hydroxyl group and a compound having an isocyanate group and a reactive silicon group in the method (C) are preferable among the above-exemplified methods since they are suitable of achieving high conversion efficiency in a relatively short reaction time. The organic polymer having a reactive silicon group obtained by the method (A) can give a curable composition with lower viscosity and better workability than the organic polymer obtained by the method (C) and the organic polymer obtained by the method (B) has strong odor due to the mercaptosilane and accordingly, the method (A) is particularly preferable.

Specific examples of the hydroxysilane compound to be used in the method (A) include halogenated silanes such as trichlorosilane, methyldichlorosilane, dimethylchlorosilane, and phenyldichlorosilane; alkoxysilanes such as trimethoxysilane, triethoxysilane, methyldiethoxysilane, methyldimethoxysilane, and phenyldimethoxysilane; acyloxysialnes such as methyldiacetoxysilane and phenyldiacetoxysilane; ketoximatosilanes such as bis(dimethylketoximato)methylsilane and bis(cyclohexylketoximato)methylsilane; and the like, but the examples thereof are not limited to them. Among them, halogenated silanes and alkoxysilanes are preferable and alkoxysilanes are particularly preferable since the curable composition to be obtained has moderate hydrolysability and is easy to handle. Among the alkoxysilanes, methyldimethylsilane is particularly preferable since it is easily available and the curable composition comprising the organic polymer to be obtained therefrom is excellent in the curability, storage stability, elongation property, and tensile strength.

Among the above-mentioned hydrosilane compounds, those represented by the general formula (4):

$$H\text{-}SiX_3 \qquad (4)$$

(wherein X represents a hydroxyl or hydrolysable group; three Xs may be same or different) are particularly preferable since a curable composition comprising an organic polymer obtained by addition reaction of the hydrosilane compounds is particularly significantly improved in the recovery, durability, and creep resistance. Furthermore, the compounds are preferable since high curability can be obtained due to being combined with the component (B) as a curing catalyst. Among the hydrosilane compounds represented by the general formula (4), trialkoxysilanes such as trimethoxysilane, triethoxysilane, and triisopropoxysilane are more preferable and trimethoxysilane is most preferable in the curability and the recovery viewpoints.

Among the above-mentioned trialkoxysilanes, in the case of using trialkoxysilanes such as trimethoxysilane having alkoxy groups (e.g. methoxy group) having one carbon atom, disproportionation reaction is sometimes promoted fast. If the disproportionation reaction is promoted, a rather harmful compound such as dimethoxysilane and tetrahydrosilane is generated. In terms of the safety of handling, trialkoxysilanes having alkoxy groups having two or more carbon atoms and represented by the general formula (5):

$$H\text{-}Si(OR^4)_3 \qquad (5)$$

(wherein three $R^4$s are independently a monovalent organic group having 2 to 20 carbon atoms) are preferable to be

used. Triethoxysialne is particularly preferable in terms of the availability, safety of handling, and recovery, durability, and creep resistance of the curable composition to be obtained. As the synthesis method (B), there may be mentioned, for example, a method of introducing a compound having a mercapto group and a reactive silicon group into an unsaturated bond site of an organic compound by radical addition reaction in the presence of a radical initiator and/or a radical generation source, however it is not particularly limited. Specific examples of the compound having a mercapto group and a reactive silicon group include γ-mercaptopropyltrimethoxysilane, γ-mercaptopropylmethyldimethoxysilane, γ-mercaptopropyltriethoxysilane, γ-mercaptopropylmethyldiethoxysilane, mercaptomethyltrimethoxysilane, mercaptomethyltriethoxysilane and the like, but are not limited to them.

A method for causing reaction of a polymer having a terminal hydroxyl group and a compound having an isocyanate group and a reactive silicon group as the synthesis method (C) may be, for example, the method disclosed in the Japanese Kokai Publication Hei-3-47825, however the method is not particularly limited. Specific examples of the compound having an isocyanate group and a reactive silicon group include γ-isocyanatopropyltrimethoxysilane, γ-isocyanatopropylmethyldimethoxysilane, γ-isocyanatopropyltriethoxysilane, γ-isocyanatopropylmethyldiethoxysilane, isocyanatomethyltrimethoxysilane, isocyanatomethyltriethoxysilane, isocyanatomethyldimethoxymethylsilane, isocyanatomethyldiethoxymethylsilane and the like, but are not limited to them.

As described above, in the case of using a silane compound such as trimethoxysilane having three hydrolysable groups bonded to one silicon atom, disproportionation reaction is sometimes promoted. If the disproportionation reaction is promoted, a rather harmful compound such as dimethoxysilane and tetrahydrosilane is generated. However in the case of using γ-mercaptopropyltrimethoxysilane or γ-isocyanatopropyltrimethoxysilane, such disproportionation reaction is not promoted. Therefore, the synthesis method (B) or (C) is preferablly employed in the case where a group such as trimethoxysilyl having three hydrolysable groups bonded to one silicon atom is used as the silicon-containing group.

The organic polymer having a reactive silicon group may have a linear or branched structure and the polymer has a number average molecular weight on the basis of conversion into polystyrene by GPC in a range from 500 to 100,000, more preferably in a range from 1,000 to 50,000, and further preferably in a range from 3,000 to 30,000. If the number average molecular weight is lower than 500, the cured product tends to be undesirable in terms of the elongation property of the cured product and if it exceeds 100,000, the workability tends to become undesirable because of high viscosity.

To obtain a rubber-like cured product with high strength, high elongation and low modulus of elasticity, the number of reactive silicon groups contained per one molecule of the organic polymer is at least one and more preferably 1.1 to 5 on average. If the number of reactive silicon groups contained in a molecule on average is lower than 1, the curability becomes insufficient and it becomes difficult to obtain good rubber elastic behavior. The reactive silicon group may be at either a terminus of the main chain or a terminus of a side chain of the organic polymer molecular chain or both. Particularly, in the case where the reactive silicon group exists at a terminus of the main chain of the molecular chain, the effective mesh length of the organic polymer component contained in the cured product to be obtained finally is lengthened and it makes easy to obtain the rubber-like cured product having high strength, high elongation, and low modulus of elasticity.

In the invention, in order to obtain the cured product having high recovery, high durability, and high creep resistance, an organic polymer having a reactive silicon group in an average number of 1.7 to 5 per one molecule may be used. The cured product crosslinked by the silanol condensation of the reactive silicon group shows good recovery and as compared with an organic polymer containing less than 1.7 on average of the reactive silicon group per one molecule, the cured product shows remarkably improved creep resistance and durability. In terms of the improvement of the recovery, durability, and creep resistance, the average number of reactive silicon groups per one molecule of the organic polymer is preferably in a range from 2 to 4 and more preferably from 2.3 to 3. If the number of reactive silicon groups per one molecule is less than 1.7, the recovery, durability, and creep resistance of a curable composition of the invention may possibly be insufficient in some cases and if it exceeds 5, the elongation of the cured product to be obtained may possibly become insufficient.

The above-mentioned polyoxyalkylene polymer is substantially a polymer containing of a repeating unit represented by the general formula (6):

$$-R^5-O- \qquad (6)$$

(wherein $R^5$ represents a divalent organic group and a linear or branched alkylene group having 1 to 14 carbon atoms) and $R^5$ in the general formula (6) is a linear or branched alkylene group having preferably 1 to 14 carbon atoms and more preferably 2 to 4 carbon atoms. Specific examples of the repeating unit represented by the general formula (6) are as follows; $-CH_2O-$, $-CH_2CH_2O-$, $-CH_2CH(CH_3)O-$, $-CH_2CH(CH_2CH_5)O-$, $-CH_2C(CH_3)_2O-$, $-CH_2CH_2CH_2CH_2O-$, and the like. The main chain skeleton of the polyoxyalkylene polymer may contain only one kind of repeating unit or two or

more kinds of repeating units. Particularly, in the case of using it for a sealant etc., a polymer containing a propylene oxide polymer as a main component is preferable since it is amorphous and has a relatively low viscosity.

A synthesis method of the polyoxyalkylene polymer may include, for example, a polymerization method using an alkaline catalyst such as KOH, a polymerization method using a transition metal compound-porphyrin complex catalyst obtained by causing reaction of an organic aluminum compound and porphyrin as described in Japanese Kokai Publication Sho-61-215623, a polymerization method using a composite metal cyanide complex catalyst disclosed in Japanese Kokoku Publication Sho-46-27250, Japanese Kokoku Publication Sho-59-15336, U.S. Patent No. 3, 278, 457, U.S. Patent No. 3, 278, 458, U.S. Patent No. 3,278,459, U.S. Patent No. 3,427,256, U.S. Patent No. 3,427,334, and U.S. Patent No. 3,427,335 etc., a polymerization method using a catalyst containing a polyphosphazene salt exemplified in Japanese Kokai Publication Hei-10-273512, and a polymerization method using a catalyst containing a phosphazene compound exemplified in Japanese Kokai Publication Hei-11-060722, however it is not limited to these examples.

A production method of a polyoxyalkylene polymer having a reactive silicon group may include those proposed in Japanese Kokoku Publication Sho-45-36319, Japanese Kokoku Publication Sho-46-12154, Japanese Kokai Publication Sho-50-156599, Japanese Kokai Publication Sho-54-6096, Japanese Kokai Publication sho-55-13767, Japanese Kokai Publication Sho-55-13468, Japanese Kokai Publication Sho-57-164123, Japanese Kokoku Publication Hei-3-2450, U.S. Patent No. 3, 632, 557, U.S. Patent No. 4, 345, 053, U.S. Patent No. 4, 366, 307, and U.S. Patent No. 4,960,844 etc., and also polyoxyalkylene polymers having a number average molecular weight of 6,000 or higher and a Mw/Mn ratio of 1.6 or lower and thus having high molecular weight and narrow molecular weight distribution as described in Japanese Kokai Publication Sho-61-197631, Japanese Kokai Publication Sho-61-215622, Japanese Kokai Publication Sho-61-215623, Japanese Kokai Publication Sho-61-218632, Japanese Kokai Publication Hei-3-72527, Japanese Kokai Publication Hei-3-47825, and Japanese Kokai Publication Hei-8-231707 can be exemplified, but not limited to these examples.

The above-mentioned polyoxyalkylene polymers having a reactive silicon group may be used each alone or two or more of them may be used in combination.

The above-mentioned saturated hydrocarbon polymer is a polymer substantially having no unsaturated carbon-carbon bond other than aromatic ring and the polymer forming its skeleton may be obtained by (1) polymerizing, as a main monomer, an olefin compound having 2 to 6 carbon atoms such as ethylene, propylene, 1-butene, and isobutylene or (2) homopolymerizing a diene compound such as butadiene and isoprene and/or copolymerizing the above-mentioned olefin compound and successively hydrogenating the homopolymer or copolymer. An isobutylene polymer and a hydrogenated polybutadiene polymer are preferable since they are easy to be introduced with a functional group into a terminus thereof and be controled in the molecular weight, and they have possibility to have a large number of terminal functional groups, and an isobutylene polymer is particularly preferable.

Those having a saturated hydrocarbon polymer as a main skeleton are excellent in heat resistance, weather resistance, durability and moisture-shutting property.

The isobutylene polymer may consist of solely isobutylene unit for all monomer units and may be a copolymer of isobutylene unit and another monomer, however in terms of the rubber property, the polymer is preferable to consist of 50% by weight or more, more preferable to consist of 80% by weight or more, and further preferable to consist of 90 to 99% by weight, of a repeating unit derived from isobutylene.

Various kinds of polymerization methods have been reported so far as a synthesis method of the saturated hydrocarbon polymer and particularly in recent years, so-called living polymerization has been developed. In the case of the saturated hydrocarbon polymer, particularly the isobutylene polymer, it is known that the polymer is easy to be produced by employing inifer polymerization (J.P. Kennedy et al., J. Polymer Sci., Polymer Chem. Ed. vol. 15, p. 2843 (1997)) discovered by Kennedy et al. ; that polymerization can be carried out to give a molecular weight in a range from 500 to 100,000 with molecular weight distribution of 1.5 or narrower; and that various kinds of functional groups may be introduced into the molecule termini.

Examples of the production method of the saturated hydrocarbon polymer having a reactive silicon group may be, for example, the methods described in Japanese Kokoku Publication Hei-4-69659, Japanese Kokoku Publication Hei-7-108928, Japanese Kokai Publication Sho-63-254149, Japanese Kokai Publication Sho-64-22904, Japanese Kokai Publication Hei-1-197509, Patent pamphlet No. 2, 539, 445 and Patent pamphlet No. 2,873,395, and Japanese Kokai Publication Hei-7-53882, however the method is not limited to these exemplified methods.

The above-mentioned saturated hydrocarbon polymer having a reactive silicon group may be used alone or two or more kinds of the polymer may be used in combination.

A (meth)acrylic ester monomer composing the main chain of the above-mentioned (meth)acrylic ester polymer is not particularly limited and various kinds of monomers may be used. Examples include (meth)acrylic acid monomers such as (meth)acrylic acid, methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, nonyl (meth)acrylate, decyl (meth)acrylate, dodecyl (meth)acrylate, phenyl (meth)acrylate, tolyl (meth)acrylate, benzyl (meth)acrylate,

2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, glycidyl (meth)acrylate, 2-aminoethyl (meth)acrylate, γ-(methacryloyloxypropyl)trimethoxysilane, γ-(methacryloyloxypropyl)dimethoxymethylsilane, methacryloyloxymethyltrimethoxysilane, methacryloyloxymethyltriethoxysilane, methacryloyloxymethyldimethoxymethylsilane, methacryloyloxymethyldiethoxymethylsilane, (meth)acrylic acid ethylene oxide adduct, trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, perfluoroethyl (meth)acrylate, trifluoromethyl (meth)acrylate, bis(trifluoromethyl)methyl (meth)acrylate, 2-trifluoromethyl-2-perfluoroethylethyl (meth)acrylate, 2-perfluorohexylethyl (meth)acrylate, 2-perfluorodecylethyl (meth)acrylate, 2-perfluorohexadecylethyl (meth)acrylate and the like. With respect to the (meth) acrylic ester polymer, the following vinyl monomers can be copolymerized together with a (meth) acrylic ester monomer. Examples of the vinyl monomer are styrene monomers such as styrene, vinyltoluene, α-methylstyrene, chlorostyrene, styrenesulfonic acid and its salts; fluorine-containing vinyl monomers such as perfluoroethylene, perfluoropropylene, and vinylidene fluoride; silicon-containing vinyl monomers such as vinyltrimethoxysilane and vinyltriethoxysilane; maleic anhydride, maleic acid, and monoalkyl and dialkyl esters of maleic acid; fumaric acid, and monoalkyl and dialkyl esters of fumaric acid; maleimide monomers such as maleimide, methylmaleimide, ethylmaleimide, propylmaleimide, butylmaleimide, hexylmaleimide, octylmaleimide, dodecylmaleimide, stearylmaleimide, phenylmaleimide, and cyclohexylmaleimide; nitrile group-containing vinyl monomers such as acrylonitrile and methacrylonitrile; amido group-containing vinyl monomers such as acrylamide and methacrylamide; vinyl esters such as vinyl acetate, vinyl propionate, vinyl pivalate, vinyl benzoate, and vinyl cinnamate; alkenes such as ethylene and propylene; conjugated dienes such as butadiene and isoprene; vinyl chloride, vinylidene chloride, ally chloride, and allyl alcohol; and the like. They may be used alone or a plurality of them may be copolymerized. Among them, in terms of the physical properties of a produced material, and the like, polymers comprising a styrene monomer and a (meth) acrylic acid monomer are preferable. (Meth) acrylic polymers comprising an acrylic ester monomer and a methacrylic ester monomer are more preferable and acrylic polymers comprising an acrylic ester monomer are further preferable. In the case of use for general construction and the like, since physical properties such as low viscosity of a mixture and low modulus, high elongation, weather resistance, and heat resistant of the cured product, and the like are required, a butyl acrylate monomer is more preferable. On the other hand, in the case of use for an automobile and the like for which oil-proofness etc. is required, an ethyl acrylate-based copolymer is more preferable. Since the polymer comprising mainly ethyl acrylate tends to be slightly inferior in low temperature properties (e.g. cold resistance) although having excellent oil-proofness, in order to improve the low temperature properties, a portion of ethyl acrylate may be replaced with butyl acrylate. However since the good oil-proofness is lowered as the ratio of butyl acrylate is increased, the ratio is preferablly suppressed to 40% or lower and more preferably to 30% or lower for use requiring the oil-proofness. Also, to improve the low temperature properties and the like without deterioration of the oil-proofness, 2-methoxyethyl acrylate, 2-ethoxyethyl acrylate and the like in which oxygen is introduced in an alkyl group in the side chain is preferably used. However, since introduction of an alkoxy group having an ether bond in the side chain tends to lower the heat resistance, the ratio is preferably adjusted to 40% or lower when heat resistance is needed. In accordance with the various uses and required aims, the required physical properties such as the oil-proofness, heat resistance, and low temperature properties should be considered and consequently, it is possible to adjust the ratio and obtain suitable polymers. For example, although it is not particularly limited, ethyl acrylate/butyl acrylate/2-methoxyethyl acrylate copolymer [(40 to 50) / (20 to 30) / (30 to 20) ratio by weight] can be exemplified as a polymer with good balance of the physical properties such as the oil-proofness, heat resistance, and low temperature properties. In this invention, these preferable monomers may be copolymerized with other monomers and also block-copolymerized with them and in that case, these preferable monomers are preferably contained at a ratio of 40% by weight or higher. In the above descriptions, (meth)acrylic acid means acrylic acid and/or methacrylic acid.

A synthesis method of a (meth)acrylic ester polymer is not particularly limited and a conventionally known method may be employed. However, a polymer obtained by a common free radical polymerization method using an azo compound, a peroxide or the like as a polymerization initiator has a problem that the molecular weight distribution value is generally as high as 2 or higher and the viscosity is thus high. Accordingly, to obtain a (meth) acrylic ester polymer having a crosslinkable functional group at a terminus of molecular chain at a high ratio, and with narrow molecular weight distribution and low viscosity, a living radical polymerization method is preferably employed.

Among "living radical polymerization method", "atom transfer radical polymerization method" for polymerizing a (meth)acrylic ester monomer using an organic halide, a halogenated sulfonyl compound or the like as an initiator and a transition metal complex as a catalyst has, in addition to the characteristics of the above-mentioned "living radical polymerization methods", a wide range of the option of the initiator and the catalyst since a halogen etc. which is relatively advantageous for the functional group conversion reaction, and is therefore further preferable as a production method of the (meth)acrylic ester polymer having a specified functional group. Examples of the atom transfer radical polymerization method are, for example, the method described in Matyjaszewski et al., J. Am. Chem. Soc., vol. 117, p. 5614 (1995).

Examples of a production method of the (meth)acrylic ester polymer having a reactive silicon group are, for example, production methods employing free radical polymerization methods using chain transfer agents and described

in Japanese Kokoku Publication Hei-3-14068, Japanese Kokoku Publication Hei-4-55444, Japanese Kokai Publication Hei-6-211922, and the like. Also, a production method employing an atom transfer radical polymerization method is disclosed in Japanese Kokai Publication Hei-9-272714 and the like, however the method is not limited to these exemplified methods.

The above-mentioned (meth) acrylic ester polymers having a reactive silicon group may be used alone or two or more kinds of them may be used in combination.

These organic polymers having a reactive silicon group may be used alone or two or more of them may be used in combination. Practically, organic polymers obtained by blending two or more kinds of polymers selected from the group consisting of polyoxyalkylene polymers having a reactive silicon group, saturated hydrocarbon polymers having a reactive silicon group, and (meth)acrylic ester polymers having a reactive silicon group may also be used.

Production methods of organic polymers by blending a polyoxyalkylene polymer having a reactive silicon group and a (meth) acrylic ester polymer having a reactive silicon group are proposed in Japanese Kokai Publication Sho-59-122541, Japanese Kokai Publication Sho-63-112642, Japanese Kokai Publication Hei-6-172631, Japanese Kokai Publication Hei-11-16763 and the like, however the production method is not limited to these exemplified methods. A preferred specific example is a production method involving blending a polyoxyalkylene polymer having a reactive silicon group with a copolymer having a reactive silicon group and a molecular chain substantially comprising a (meth) acrylic ester monomer unit having an alkyl group of 1 to 8 carbon atoms and represented by the following general formula (7):

$$-CH_2-C(R^6)(COOR^7)- \qquad (7)$$

(wherein $R^6$ represents a hydrogen atom or a methyl group; and $R^7$ denotes an alkyl group having 1 to 8 carbon atoms) and a (meth)acrylic ester monomer unit having an alkyl group of 10 or more carbon atoms and represented by the following general formula (8):

$$-CH_2-C(R^6)(COOR^8)- \qquad (8)$$

(wherein $R^6$ represents the same as defined above; and $R^8$ denotes an alkyl group having 10 or more carbon atoms).

Examples of $R^7$ in the above-mentioned formula (7) are alkyl groups having 1 to 8, preferably 1 to 4, and more preferably 1 or 2 carbon atoms such as methyl group, ethyl group, propyl group, n-butyl group, tert-butyl group, 2-ethylhexyl group and the like. The alkyl group standing for $R^7$ may be a single alkyl group or two or more alkyl groups in combination.

Examples of $R^8$ in the above-mentioned formula (8) are long chain alkyl groups having 10 or more, generally 10 to 30, and preferably 10 to 20 carbon atoms such as lauryl group, tridecyl group, cetyl group, stearyl group, behenyl group and the like. Same as the case of $R^7$, the alkyl group standing for $R^8$ may be a single alkyl group or two or more alkyl groups in combination.

The molecular chain of the (meth) acrylic ester copolymer substantially comprises the monomer units represented by the general formulae (7) and (8) and "substantially" here means the total of the monomer units represented by the general formulae (7) and (8) contained in the copolymer exceeds 50% by weight. The total of the monomer units represented by the general formulae (7) and (8) is preferably 70% by weight or more.

The ratio of the monomer unit represented by the general formula (7) and the monomer unit represented by the general formula (8) is preferably from (95:5) to (40:60) and more preferably (90:10) to (60:40) on the basis of weight.

The monomer units which may be contained in the copolymer, other than those represented by the general formulae (7) and (8), may include acrylic acid such as acrylic acid and methacrylic acid; amido group-containing monomers such as acrylamide, methacrylamide, N-methylolacrylamide, and N-methylolmethacrylamide, epoxy group-containing monomers such as glycidyl acrylate and glycidyl methacrylate, and amino group-containing monomers such as diethylaminoethyl acrylate, diethylaminoethyl methacrylate, and aminoethyl vinyl ether; and monomer units derived from acrylonitrile, styrene, $\alpha$-methylstyrene, alkyl vinyl ether, vinyl chloride, vinyl acetate, vinyl propionate, and ethylene.

The organic polymer obtained by blending the saturated hydrocarbon polymer having a reactive silicon group and the (meth) acrylic ester copolymer having a reactive silicon group may include those proposed in Japanese Kokai Publication Hei-1-168764, Japanese Kokai Publication 2000-186176 and the like, however it is not limited to these exemplified polymers.

Further, a production method of the organic polymer obtained by blending the (meth) acrylic ester copolymer having a reactive silicon functional group may also include a method of polymerizing a (meth)acrylic ester monomer in the presence of an organic polymer having a reactive silicon group. The methods are practically disclosed in Japanese Kokai Publication Sho-59-78223, Japanese Kokai Publication Sho-59-168014, Japanese Kokai Publication Sho-60-228516, Japanese Kokai Publication Sho-60-228517 and the like, however the method is not particularly limited to these exemplified methods.

On the other hand, the main chain skeleton of the organic polymer may contain another component such as

an urethane bond component in an extent that the effect of the invention is not so significantly adversely affected.

The above-mentioned urethane bond component is not particularly limited and may include a group (hereinafter, referred to as an amido segment in some cases) produced by reaction of an isocyanate group and an active hydrogen group.

The amido segment is a group represented by the general formula (9):

$$-NR^9-C(=O)- \qquad (9)$$

(wherein $R^9$ denotes a hydrogen atom or a substituted or unsubstituted monovalent organic group).

The above-mentioned amido segment may specifically include an urethane group produced by reaction of an isocyanate group and a hydroxyl group; an urea group produced by reaction of an isocyanate group and an amino group; a thiourethane group produced by reaction of an isocyanate group and a mercapto group; and the like. Also, in the invention, groups produced by reaction of an active hydrogen in the above-mentioned urethane group, urea group, and thiourea group further with an isocyanate group are also included as the group represented by the general formula (9).

An industrial method for easily producing the organic polymer having the amido segment and a reactive silicon group may include, for rexample, a method for producing the organic polymer by causing reaction of an excess amount of a polyisocyanate compound with an organic polymer having an active hydrogen-containing group at a terminus for obtaining a polymer having an isocyanate group at the terminus of a polyurethane type main chain and either successively or simultaneously causing reaction of the W-group of a silicon compound represented by the general formula (10) with all or a portion of the isocyanate group:

$$W-R^{10}-SiR^3_{3-c}X_c \qquad (10)$$

(wherein $R^3$, X, and c are the same as described above; $R^{10}$ denotes a divalent organic group and more preferably a substituted or unsubstituted divalent hydrocarbon group having 1 to 20 carbon atoms; W denotes an active hydrogen-containing group selected from a hydroxyl, carboxyl, mercapto, and (primary or secondary) amino groups). Conventionally known production methods of the organic polymer relevant to the above-mentioned production method are exemplified in Japanese Kokoku Publication Sho-46-12154 (U.S. Patent No. 3,632,557), Japanese Kokai Publication Sho-58-109529 (U.S. Patent No. 4,374,237), Japanese Kokai Publication Sho-62-13430 (U.S. Patent No. 4, 645, 816), Japanese Kokai Publication Hei-8-53528 (EPO Patent No. 0676403), Japanese Kokai Publication Hei-10-204144 (EPO Patent No. 0831108), Japanese Kohyo Publication 2003-508561 (U.S. Patent No. 6,197,912), Japanese Kokai Publication Hei-6-211879 (U.S. Patent No. 5,364,955), Japanese Kokai Publication Hei-10-53637 (U.S. Patent No. 5, 756, 751), Japanese Kokai Publication Hei-11-100427, Japanese Kokai Publication 2000-169544, Japanese Kokai Publication 2000-169545, Japanese Kokai Publication 2002-212415, Japanese Patent No. 3, 313, 360, U.S. Patent No. 4,067,844, .S. Patent No. 3, 711, 445, Japanese Kokai Publication 2001-323040, and the like.

Also, the method may include a method for producing the organic polymer by causing reaction of a reactive silicon group-containing isocyanate compound represented by the general formula (11) with an organic polymer having an active hydrogen-containing group at a terminus:

$$O=C=N-R^{10}-SiR^3_{3-c}X_c \qquad (11)$$

(wherein $R^3$, $R^{10}$, X, and c are the same as described above). Conventionally known production methods of the organic polymer relevant to the above-mentioned production method are exemplified in Japanese Kokai Publication Hei-11-279249 (U.S. Patent No. 5,990,257), Japanese Kokai Publication 2000-119365 (U.S. Patent No. 6046270), Japanese Kokai Publication Sho-58-29818 (U.S. Patent No. 4345053), Japanese Kokai Publication Hei-3-47825 (U.S. Patent No. 5068304), Japanese Kokai Publication Hei-11-60724, Japanese Kokai Publication 2002-155145, Japanese Kokai Publication 2002-249538, WO 03/018658, WO 03/059981, and the like.

The organic polymer having an active hydrogen-containing group at a terminus may include oxyalkylene polymers having a hydroxyl group at a terminus (e.g. polyether polyols), polyacrylic polyols, polyester polyols, saturated hydrocarbon polymers having a hydroxyl group at a terminus (e.g. polyolefin polyols), polythiols compounds, polyamine compounds and the like. Among them, polyether polyols, polyacrylic polyols, and polyolefin polyols are preferable since the glass transition temperature of the organic polymers to be obtained is relatively low and cured products to be obtained are excellent in cold resistance. Particularly, polyether polyols are more preferable since the organic polymers to be obtained have low viscosity, good workability and excellent deep part curability and adhesion. Polyacrylic polyols and saturated hydrocarbon polymers are further preferable since cured products derived from the organic polymers to be obtained are excellent in weather resistance and heat resistance.

The polyether polyols to be used may be those which are produced by any production method, however the polyether polyols preferably have at least 0.7 hydroxyl groups per molecular terminus on average of all molecules.

Practically, oxyalkylene polymers produced by using a conventional alkali metal catalyst; and oxyalkylene polymers produced by causing reaction of alkylene oxides with an initiator such as polyhydroxy compounds having at least two hydroxyl groups in the presence of a composite metal-cyanide complex or cesium can be exemplified, for example.

Among the above-mentioned polymerization methods, the polymerization method using a composite metal-cyanide complex is preferable since oxyalkylene polymers with low un-saturation degree, narrow Mw/Mn, low viscosity, high acid resistance, and high weather resistance can be obtained.

Examples of the above-mentioned polyacrylic polyols are polyols having a (meth) acrylic acid alkyl ester (co) polymer as a skeleton and containing a hydroxyl group in a molecule. A synthesis method of the polymers is preferably a living radical polymerization method and more preferably an atom transfer radical polymerization method since they give narrow molecular weight distribution and low viscosity. Also, a polymer obtained by so-called SGO process, that is a polymer obtained by continuous bulk polymerization of an acrylic alkyl ester monomer at high temperature and high pressure as described in Japanese Kokai Publication 2001-207157 is preferablly used. More practically, UH-2000 manufactured by Toagosei Co., Ltd. can be exemplified, for example.

Specific examples of the above-mentioned polyisocyanate compound may include aromatic polyisocyanates such as toluene (tolylene) diisocyanate, diphenylmethane diisocyanate, and xylylene diisocyanate; aliphatic polyisocyanates such as isophorone diisocyanate and hexamethylene diisocyanate; and the like.

The silicon compound represented by the general formula (10) is not particularly limited and specific examples thereof are amino group-containing silanes such as γ-aminopropyltrimethoxysilane, N-(β-aminoethyl)-γ-aminopropyltrimethoxysilane, γ-(N-phenyl)aminopropyltrimethoxysilane, N-ethylaminoisobutyltrimethoxysilane, N-cyclohexylaminomethyltriethoxysilane, N-cyclohexylaminomethyldiethoxymethylsilane, and N-phenylaminomethyltrimethoxysilane; hydroxy group-containing silanes such as γ-hydroxypropyltrimethoxysilane; mercapto group-containing silanes such as γ-mercaptopropyltrimethoxysilane; and the like. Also, as described in Japanese Kokai Publication Hei-6-211879 (U.S. Patent No. 5,364,956), Japanese Kokai Publication Hei-10-53637 (U.S. Patent NO. 5,756,751), Japanese Kokai Publication Hei-10-204144 (EPO Patent No. 0831108), Japanese Kokai Publication 2000-169544, and Japanese Kokai Publication 2000-169545, Michael adducts of various kinds of α,β-unsaturated carbonyl compounds and primary amino group-containing silanes or Michael adducts of various kinds of (meth)acryloyl group-containing silanes and primary amino group-containing compounds are usable as the silicon compound represented by the general formula (10).

The reactive silicon group-containing isocyanate compound represented by the general formula (11) is not particularly limited and specific examples thereof are γ-trimethoxysilylpropyl isocyanate, γ-triethoxysilylpropyl isocyanate, γ-methyldimethoxysilylpropyl isocyanate, γ-methyldiethoxysilylpropyl isocyanate, trimethoxysilylmethyl isocyanate, triethoxymethylsilylmethyl isocyanate, dimethoxymethylsilylmethyl isocyanate, diethoxymethylsilylmethyl isocyanate and the like. Also, as described in Japanese Kokai Publication 2000-119365 (U.S. Patent No. 6,046,270), compounds obtained by reaction of silicon compounds represented by the general formula (10) and excess amounts of the above-mentioned polyisocyanate compounds are usable as the reactive silicon group-containing isocyanate compound represented by the general formula (11).

If a large quantity of the amido segment in contained in the main chain skeleton of the organic polymer as the component (A) of the invention, the viscosity of the organic polymer is increased and the composition may possibly be inferior in workability. On the other hand, due to the amido segment in the main chain skeleton of the component (A), the curability of the composition of the invention tends to be increased. Accordingly, combination use of the organic polymer having the amide segment in its main chain skeleton as the component (A) with the carboxylic acid metal salt and/or carboxylic acid as the component (B) gives a curable composition with both of practically usable curability and adhesion while containing an organotin-free catalyst. In the case where the amido segment is contained in the main chain skeleton of the component (A), the number of amido segments is preferably 1 to 10, more preferably 1.5 to 7, and further preferably 2 to 5, per one molecule on average. If it is lower than 1, the curability is sometimes insufficient and if it is more than 10, the organic polymer become highly viscous and the composition may become inferior in workability.

In the invention, as the component (B), the carboxylic acid metal salt (b1) and/or the carboxylic acid (b2) according to claim 1 is used. The component (B) is proper for forming a siloxane bond from a hydroxyl group or a hydrolysable group bond to a silicon atom contained in the organic polymer as the component (A), that is, the component (B) works as so-called silanol condensation catalyst.

Preferable examples of the carboxylic acid metal salt (b1) are tin carboxylate, lead carboxylate, bismuth carboxylate, potassium carboxylate, calcium carboxylate, barium carboxylate, titanium carboxylate, zirconium carboxylate, hafnium carboxylate, vanadium carboxylate, manganese carboxylate, iron carboxylate, cobalt carboxylate, nickel carboxylate, and cerium carboxylate since they have high catalytic activity, more preferable examples are tin carboxylate, lead carboxylate, bismuth carboxylate, titanium carboxylate, iron carboxylate, and zirconium carboxylate, even more preferable examples may be tin carboxylate, and stannous carboxylate is most preferable.

As the acid group-containing carboxylic acid in the carboxylic acid metal salt, a hydrocarbon type compound which contains a carboxylic group and has up to 40 carbon atoms including the carbon of the carbonyl group is suitably used, and in terms of the availability, a hydrocarbon type carboxylic acid having up to 20 carbon atoms is further suitably

used.

In the case where the melting point of the carboxylic acid is high (that is, the crystallinity thereof is high), the melting point of the acid group-containing carboxylic acid metal salt obtained therefrom is also high and therefore is difficult to be handled (that is, inferior in workability). Thus, the melting point of the carboxylic acid is preferablly 65°C or lower, more preferablly -50 to 50°C, and even more preferablly -40 to 35°C.

In the case where the number of carbon atoms of the carboxylic acid is high (that is, the molecular weight thereof is high), the acid group-containing carboxylic acid metal salt obtained therefrom is solid or thick liquid and thus is difficult to be handled (that is, inferior in workability). On the contrary, in the case where the number of carbon atoms of the carboxylic acid is low (that is, the molecular weight thereof is low), the acid group-containing tin carboxylate contains a large quantity of components easy to be volatilized by heating and therefore the catalytic function of the carboxylic acid metal salt tends to be lowered in some cases. Particularly, in the case where the composition is thinly spread (as a thin layer), volatility thereof by heating is high and therefore the catalytic function of the carboxylic acid metal salt is considerably decreased in some cases. Accordingly, the above-mentioned carboxylic acid preferably has 2 to 20 carbon atoms, more preferably 6 to 17 carbon atoms, and even more preferably 8 to 12 carbon atoms including the carbon atom of the carbonyl group.

In terms of the handling easiness (workability and viscosity) of the carboxylic acid metal salt, dicarboxylic or monocarboxylic acid metal salts are preferable and monocarboxylic acid metal salts are even more preferable. According to the present invention the carboxylic acid metal salt is a metal salt of a carboxylic acid of which the carbon atom adjacent to a carbonyl group is a quaternary carbon (tin neodecanoate, tin pivalate, and the like) in terms of high curing rate and adhesion as compared with other carboxylic acid metal salts.

Examples of the acid group-containing carboxylic acid in the metal salt of a carboxylic acid of which the carbon atom adjacent to a carbonyl group is a quaternary carbon may be linear fatty acids represented by the general formula (12):

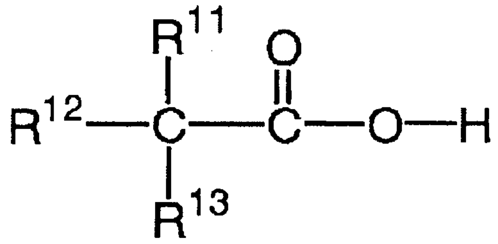

(12)

(wherein $R^{11}$, $R^{12}$, and $R^{13}$ independently denote a substituted or unsubstituted monovalent hydrocarbon group and may contain a carboxyl group) or alicyclic fatty acids represented by the general formulae (13):

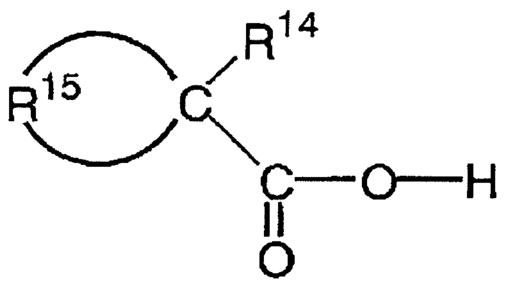

(13)

(wherein $R^{14}$ denotes a substituted or unsubstituted monovalent hydrocarbon group, $R^{15}$ denotes a substituted or unsubstituted divalent hydrocarbon group and both may contain a carboxyl group), and (14) :

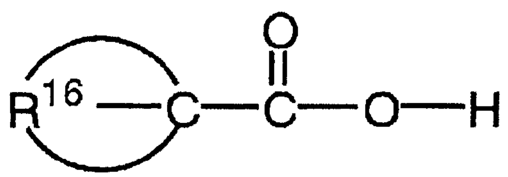

(14)

(wherein $R^{16}$ denotes a substituted or unsubstituted trivalent hydrocarbon group and may contain a carboxyl group). Specific examples thereof include linear monocarboxylic acids such as pivalic acid, 2,2-dimethylbutyric acid, 2-ethyl-2-methylbutyric acid, 2,2-diethylbutyric acid, 2,2-dimethylvaleric acid, 2-ethyl-2-methylvaleric acid, 2,2-diethylvaleric acid,

2,2-dimethylhexanoic acid, 2,2-diethylhexanoic acid, 2,2-dimethyloctanoic acid, 2-ethyl-2,5-dimethylhexanoic acid, neodecanoic acid, versatic acid, and 2,2-dimethyl-3-hydroxypropoinic acid; linear dicarboxylic acids such as dimethylmalonic acid, ethylmethylmalonic acid, diethylmalonic acid, 2,2-dimethylsuccinic acid, 2,2-diethylsuccinic acid, and 2,2-dimethylglutaric acid; linear tricarboxylic acids such as 3-methylisocitric acid and 4,4-dimethylaconitic acid; cyclic carboxylic acids such as 1-methylcyclopentanecarboxylic acid, 1,2,2-trimethyl-1,3-cyclopentanedicarboxylic acid, 1-methylcyclohexanecarboxylic acid, 2-methylbicyclo[2.2.1]-5-heptene-2-carboxylic acid, 2-methyl-7-oxabicyclo[2.2.1]-5-heptene-2-carboxylic acid, 1-adamantanecarboxylic acid, bicycle[2.2.1]heptane-1-carboxylic acid, bicycle[2.2.2]octane-1-carboxylic acid; and the like. The compounds having these structures exist many in nature and they may of course be used. Particularly in terms of good compatibility with the component (A) and handling easiness, monocarboxylic acid metal salts are more preferable and linear monocarboxylic acid metal salts are further preferable. Furthermore, due to the availability, metal salts of pivalic acid, neodecanoic acid, versatic acid, 2,2-dimethyloctanoic acid, 2-ethyl-2,5-dimethylhexanoic acid and the like are particularly preferable.

The acid group-containing carboxylic acids in the metal salt of a carboxylic acid of which the carbon atom adjacent to a carbonyl group is a quaternary carbon have preferably 5 to 20, more preferably 6 to 17, and further preferably 8 to 12 carbon atoms. If the number of carbon atoms is higher than the range, they tend to be solid and to become hardly compatible with the component (A) and thus no reactivity tends to be obtained. On the other hand, if the number of carbon atoms is lower than the range, they become more volatile and tend to be odorous. From this viewpoint, the metal salts of neodecanoic acid, versatic acid, 2,2-dimethyloctanoic acid, and 2-ethyl-2,5-dimethylhexanoic acid are most preferable.

Use of the carboxylic acid metal salt of the component (b1) in the invention gives the cured product with good recovery, durability, and creep resistance.

Further, the above exemplified carboxylic acid metal salts as the component (b1) may be used alone and also two or more of them may be used in combination.

A carboxylic acid may be used as the component (b2) in the invention. The heat resistance of the cured product to be obtained using the carboxylic acid as a catalyst is better than that to be obtained using the carboxylic acid metal salt (b1) and therefore is preferable.

The component (b2) can be used alone as the curing catalyst, however combination use of the component (b2) with the component (b1) is effective to improve the curing activity of the curable composition of the invention. In the case where the carboxylic acid metal salt that is the component (b1) is used as the curing catalyst, the curability is decreased after storage in some cases and such curability decrease after storage can be suppressed by combination use thereof with the component (b2).

Examples of the carboxylic acid to be used as the component (b2) may be the various acid group-containing carboxylic acids exemplified as carboxylic acid metal salts for the component (b1).

Similarly to the acid group-containing carboxylic acid in the carboxylic acid metal salt as the component (b1), as for the carboxylic acid of the component (b2), the number of carbon atoms including the carbon of the carbonyl group preferablly in a range from 2 to 20, more preferably 6 to 17, and even more preferably 8 to 12. In terms of the handling easiness (the workability and viscosity) of the carboxylic acid, dicarboxylic acids or monocarboxylic acids are preferable and monocarboxylic acids are more preferable. Further, the carboxylic acid is a quaternary carbon (neodecanoic acid, pivalic acid, and the like) in terms of high curing rate and adhesion.

In terms of the availability, curability, and workability, the carboxylic acid is particularly preferably neodecanoic acid, versatic acid, 2,2-dimethyloctanoic acid, 2-ethyl-2,5-dimethylhexanoic acid.

By using the carboxylic acid of the component (b2), the curable composition which gives a cured product with good recovery, durability and creep resistance can be obtained.

As for the addition amount of the carboxylic acid metal salt (b1) and/or carboxylic acid (b2) as the component (B), the total amount of carbonyl group composing an acid group in the component (B) per 100 g of the component (A) is required to be 0.5 to 11 mmol in terms of the adhesion and curability, preferably 1 to 10 mmol. Adjustment of the addition amount of the component (B) within the above-mentioned range makes it possible to provide substantially sufficient adhesion although the organotin-free catalyst is used.

The component (b2) may be used alone or two or more of them may be used in combination.

The component (b1) and the component (b2) may be used alone or in combination.

In the invention, a filler is used as the component (C). The component (C) is added for the purpose of adjusting the viscosity, thixotropy, and other workabilities of the curable composition of the invention, or adjusting the physical properties such as modulus, elongation, and tensile strength of the cured product obtained by curing the curable composition, and further lowering the cost.

Specific examples of the filler may include reinforcing fillers such as fumed silica, precipitated silica, crystalline silica, fused silica, dolomite, silicic anhydride, hydrous silicic acid, and carbon black; fillers such as ground calcium carbonate, colloidal calcium carbonate, magnesium carbonate, china clay, calcined clay, clay, talc, titanium oxide, bentonite, organic bentonite, ferric oxide, aluminum fine powder, flint powder, zinc oxide, activated zinc white, shirasu balloon,

glass microballoon, organic microballoon of phenol resins and vinylidene chloride resins, and resin powder such as PVC powder and PMMA powder; fibrous fillers such as asbestos, glass fibers and filaments; and the like. Among them, ground calcium carbonate, colloidal calcium carbonate, or titanium oxide is more preferable since use thereof may give a cured product with high elongation, a curable composition with high storage stability, and a curable composition with high whiteness, and also the cost thereof is low.

As described in Japanese Kokai Publication 2001-181532, the filler may be previously dehydrated and dried by evenly mixing the filler with a dehydration agent such as calcium oxide, enclosing the mixture in a bag made of an air-tight material, and leaving the bag for a proper duration. Use of the filler with lowered water content improves the storage stability particularly in the case of a one package composition.

In the case where a composition with high transparency is obtained, as described in Japanese Kokai Publication Hei-11-302527, a polymer powder derived from a polymer such as methyl methacrylate, amorphous silica or the like may be used as a filler. Also, as described in Japanese Kokai Publication 2000-38560, a composition with high transparency can be obtained by using hydrophobic silica, that is a micronized silicon dioxide bonded with hydrophobic groups on the surface, as a filler. Generally, silanol groups (-SiOH) form the surface of the micronized silicon dioxide and a hydrophobic silica is produced by forming (-SiO-hydrophobic group) by causing reaction of the silanol group with an organic silicon halide compound, alcohols and/or the like. Particularly, the silanol group on the surface of the micronized silicon dioxide is reacted and bonded with dimethylsiloxane, hexamethyldisilazane, dimethyldichlorosilane, trimethoxyoctylsilane, trimethylsilane or the like. The micronized silicon dioxide the surface of which is composed of silanol groups (-SiOH) is called as a micronized hydrophilic silica.

The use amount of the component (C) is in a range from 1 to 300 parts by weight and more preferably in a range from 10 to 200 parts by weight per 100 parts by weight of the polymer as the component (A). If the addition amount of the component (C) is lower than the range, the cured product may become insufficient in the strength in some cases and the curable composition to be obtained may have low thixotropy and insufficient workability in some cases. If the addition amount of the component (C) exceeds the range, the curable composition to be obtained may have high viscosity and inferior workability in some cases and also tends to be inferior in the storage stability.

In the case of obtaining a cured product with high strength by using these fillers, it is preferable to use mainly a filler selected from fumed silica, precipitated silica, crystalline silica, fused silica, dolomite, silicic anhydride, hydrous silicic acid and carbon black, surface-treated fine calcium carbonate, calcined clay, clay, activated zinc white and the like and if it is used in a range from 1 to 200 parts by weight per 100 parts by weight of reactive silicon group-containing organic polymer (A), a preferred result can be obtained. In the case where a cured product with high elongation at break is obtained, a preferred result can be attained by mainly using 5 to 200 parts by weight of a filler selected from titanium oxide, calcium carbonate such as ground calcium carbonate, magnesium carbonate, talc, ferric oxide, zinc oxide, shirasu balloon and the like per 100 parts by weight of the reactive silicon group-containing organic polymer (A). In general, calcium carbonate has more significant effect of improving the strength at break, elongation at break, and adhesion of a cured product, as it has higher specific surface area. These fillers may be used alone or two or more of the may be used as a mixture. The surface-treated fine calcium carbonate is preferable to have an average particle diameter of 0.5 μm or smaller and surface-treated with a fatty acid or a fatty acid salt. Ground calcium carbonate with a large particle diameter preferablly has an average particle diameter of 0.5 μm or larger, and surface-treated one is preferablly used from the storage stability viewpoint.

In the invention, an amino group-containing silane coupling agent is used as the component (D). The amino group-containing silane coupling agent is a compound having a hydrolysable silicon group and an amino group and effective to improve the adhesion of the curable composition of the invention.

The effect of the aminosilane coupling agent to be added to the curable composition of the invention is remarkably effective to improve the adhesion in the case of using the curable composition for various kinds of adherends, e.g. inorganic substrates such as glass, aluminum, stainless steel, zinc, copper, and mortar and organic substrates such as polyvinyl chloride, acrylic polymer, polyester, polyethylene, polypropylene, and polycarbonate under non-primer condition or primer condition. In the case of being used under non-primer condition, the curable composition remarkably improves the adhesion to the various adherends.

Examples of the reactive silicon group of the aminosilane coupling agent may include substances having a group represented by the above-mentioned formula (2) wherein X is a hydrolysable group. Practical examples thereof may be those groups exemplified above for the hydrolysable group and methoxy, ethoxy, and the like groups are preferable in terms of the hydrolysis rate. The number of hydrolysable group is preferably 2 or higher and more preferably 3 or higher. Among the above-mentioned amino groups, primary amino groups are preferable due to its high effect of improving the adhesion.

Specific examples of the amino silane coupling agent may be γ-aminopropyltrimethoxysilane, γ-aminopropyltriethoxysilane, γ-aminopropyltriisopropoxysilane, γ-aminopropylmethyldimethoxysilane, γ-aminopropylmethyldiethoxysilane, γ-(2-aminoethyl)aminopropyltrimethoxysilane, γ-(2-aminoethyl)aminopropylmethyldimethoxysilane, γ-(2-aminoethyl)aminopropyltriethoxysilane, γ-(2-aminoethyl)aminopropylmethyldiethoxysilane, γ-(2-aminoethyl)aminopropyltriisopropoxysilane, γ-(6-aminohexyl)aminopropyltrimethoxysilane, 3-(N-ethylamino)-2-methylpropyltrimethoxysilane, 2-aminoethylaminomethyltrimethoxysilane, N-cyclohexylaminomethyltriethoxysilane, N-cyclohexylaminomethyldiethoxymethylsilane, γ-ureidopropyltrimethoxysilane, γ-ureidopropyltriethoxysilane, N-phenyl-γ-aminopropyltrimethoxysilane, N-phenylaminomethyltrimethoxysilane, N-benzyl-γ-aminopropyltrimethoxysilane, N-vinylbenzyl-γ-aminopropyltriethoxysilane, N,N'-bis[3-(trimethoxysilyl)propyl]ethylenediamine, N-cyclohexylaminomethyltriethoxysilane, N-cyclohexylaminomethyldiethoxymethylsilane, N-phenylaminomethyltrimethoxysilane and the like.

The use amount of the component (D) is in a range from 0.1 to 20 parts by weight and preferably in a range from 0.5 to 10 parts by weight per 100 parts by weight of the polymer of the component (A). If the addition amount of the component (D) is lower than the range, the adhesion improvement effect is insufficient in some cases. If the addition amount of the component (D) exceeds the range, the cured product tends to have low elongation and also the deep part curability tends to be worsened.

In the case where the activity is low and a proper curability cannot be obtained by using the carboxylic acid metal salt (b1) and/or the carboxylic acid (b2) of the component (B) alone, an amine compound, which is the component (E), may be added as a promoter.

Specific examples of the amine compound as the component (E) may include aliphatic primary amines such as methylamine, ethylamine, propylamine, isopropylamine, butylamine, amylamine, hexylamine, octylamine, 2-ethylhexylamine, nonylamine, decylamine, laurylamine, pentadecylamine, cetylamine, stearylamine, and cyclohexylamine; aliphatic secondary amines such as dimethylamine, diethylamine, dipropylamine, diisopropylamine, dibutylamine, diamylamine, dihexylamine, diocylamine, bis(2-ethylhexyl)amine, didecylamine, dilaurylamine, dicetylamine, distearylamine, methylstearylamine, ethylstearylamine, and butylstearylamine; aliphatic tertiary amines such as triamylamine, trihexylamine and trioxylamine; aliphatic unsaturated amines such as triallylamine and oleylamine; aromatic amines such as laurylaniline, stearylaniline, and triphenylamine; other amines such as monoethanolamine, diethanolamine, triethanolamine, 3-hydroxypropylamine, diethylenetriamine, triethylenetetramine, benzylamine, 3-methoxypropylamine, 3-lauryloxypropylamine, 3-dimethylaminopropylamine,3-diethylaminopropylamine, xylylenediamine, ethylenediamine, hexamethylenediamine, triethylenediamine, guanidine, diphenylguanidine, 2,4,6-tris(dimethylaminomethyl)phenol, morpholine, N-methylmorpholine, 2-ethyl-4-methylimidazole, 1,8-diazabicyclo(5,4,0)undecene-7(DBU), and 1,5-diazabicyclo(4,3,0)nonene-5(DBN); and the like, however the amine compound is not limited to these examples.

Since the function of the component (E) as a promoter considerably differs in accordance with the structure of the component (E) itself and the compatibility with the component (A), it is preferable to select these compounds as the component (D) which are suitable according to the type of the component (A) to be used. For example, in the case of using a polyoxyalkylene polymer as the component (A), owing to the high function as a promoter, primary amines such as octylamine and laurylamine are preferable and also amine compounds having a hydrocarbon group containing at least one heteroatom are preferable. Herein, the heteroatom includes N, O, S and the like, however it is not limited to these elements. Examples of the above-mentioned amine compounds are the amines exemplified as other amines, and the like. Among them, amine compounds having a hydrocarbon group containing a heteroatom on any carbon atom located at the second to fourth positions are more preferable. Examples of the amine compounds are ethylenediamine, ethanolamine, dimethylaminoethylamine, diethylaminoethylamine, 3-hydroxypropylamine, diethylenetriamine, 3-methoxypropylamine, 3-lauryloxypropylaimine, N-methyl-1,3-propanediamine, 3-dimethylaminopropylamine, 3-diethylaminopropylamine, 3-(1-piperadinyl)propylamine, 3-morpholinopropylamine and the like. Especially, 3-diethylaminopropylamine and 3-morpholinopropylamine are more preferable in terms of the high function as a promoter. Particularly preferable is 3-diethylaminopropylamine since it gives a curable composition with excellent adhesion, workability, and storage stability. Also, in the case of using an isobutylene polymer as the component (A), aliphatic secondary amines having a relatively long chain such as dioctylamine and distearylamine and aliphatic secondary amines such as dicyclohexylamine are preferable because they have high functions as a promoter.

The addition amount of the amine compound as the component (E) is preferably about 0.01 to 20 parts by weight and more preferably 0.1 to 5 parts by weight per 100 parts by weight of the organic polymer of the component (A). If the addition amount of the amine compound is lower than 0.01 parts by weight, the curing rate may possibly be retarded and curing reaction may not be promoted sufficiently in some cases. On the other hand, the addition amount of the amine compound exceeds 20 parts by weight, the pot life tends to be so short and then the workability tends to be worsened. On the contrary, the curing rate may be retarded in some cases.

The carboxylic acid metal salt (b1) and/or the carboxylic acid (b2) of (B) is used as the curing catalyst of the invention and to an extent that the effect of the invention is not lowered, another curing catalyst may be used in combination. Specific examples of these may be titanium compounds such as tetrabutyl titanate, tetrapropyl titanate, titanium tetrakis(acetylacetonate), bis(acetylacetonato)diisopropoxytitanium, diisopropoxytitanium bis(ethylacetoacetate); organoaluminum compounds such as aluminum tris(acetylacetonate), aluminum tris(ethylacetoacetate), and diisopropoxyaluminum ethyl acetoacetate; zirconium compounds such as zirconium tetrakis(acetylacetonate). Combination use with these curing catalysts increases the catalytic activity, thin film curing property, adhesion and the like. It is necessary for the composition of the invention to be free from organotin(IV) compounds such as dibutyltin dilaurate, dibutyltin maleate,

dibutyltin phthalate, dibutyltin dioctanoate, dibutyltin bis(2-ethylhexanoate), dibutyltin bis(methylmaleate), dibutyltin bis(ethylmaleate), dibutyltin bis(butylmaleate), dibutyltin bis(octylmaleate), dibutyltin bis(tridecylmaleate) dibutyltin bis(benzylmaleate), dibutyltin diacetate, dioctyltin bis(ethylmaleate), dioctyltin bis(octylmaleate), dibutyltin dimethoxide, dibutyltin bis(nonylphenoxide), dibutenyltin oxide, dibutyltin bis(acetylacetonate), dibutyltin bis (ethylacetoacetate), a reaction product of dibutyltin oxide and a silicate compound, and a reaction product of dibutyltin oxide and a phthalic acid ester.

In addition, the composition of the invention may contain silane coupling agents other than the amino group-containing silane coupling agent. Specific examples of the silane coupling agents other than the amino group-containing silane coupling agent include isocyanate group-containing silanes such as γ-isocyanatopropyltrimethoxysilane, γ-isocyanatopropyltriethoxysilane, γ-isocyanatopropylmethyldiethoxysilane, γ-isocyanatopropylmethyldimethoxysilane, trimethoxysilylmethylisocyanate, and dimethoxymethylsilylmethylisocyanate; ketimine type silanes such as N-(1,3-dimethylbutylidene)-3-(triethoxysilyl)-1-propaneamine; mercapto group-containing silanes such as γ-mercaptopropyltrimethoxysilane, γ-mercaptopropyltriethoxysilane, γ-mercaptopropylmethyldimethoxysilane, γ-mercaptopropylmethyldiethoxysilane, mercaptomethyltrimethoxysilane, and mercaptomethyltriethoxysilane; epoxy group-containing silanes such as γ-glycidoxypropyltrimethoxysilane, γ-glycidoxypropyltriethoxysilane, γ-glycidoxypropylmethyldimethoxysilane, β-(3,4-epoxycyclohexyl)ethyltrimethoxysilane, and β-(3,4-epoxycyclohexyl)ethyltriethoxysilane; carboxysilanes such as β-carboxyethyltriethoxysilane, β-carboxyethylphenylbis(2-methoxyethoxy)silane, and N-β-(carboxymethyl)aminoethyl-γ-aminopropyltrimethoxysilane ; vinyl type unsaturated group-containing silanes such as vinyltrimethoxysilane, vinyltriethoxysilane, γ-methacryloyloxypropylmethyldimethoxysilane, γ-acryloyloxypropyltriethoxysilane, and methacryloyloxymethyltrimethoxysilane; halogen-containing silanes such as γ-chloropropyltrimethoxysilane; isocyanurate silanes such as tris(3-trimethoxysilylpropyl)isocyanurate; and the like. Examples usable as the silane coupling agent may also include modified derivatives of these exemplified compounds. Examples of the reaction product of the silane coupling agent are reaction products of the above-mentioned aminosilanes and epoxysilanes, reaction products of the aminosilanes and isocyanate silanes, partially condensed silane coupling agents, and the like.

Examples of the adhesion promoter other than the silane coupling agents may be, for example, epoxy resins, phenol resins, sulfur, alkyl titanates, aromatic polyisocyanate and the like. The above-exemplified adhesion promoters may be used alone or two or more of them may be used as a mixture.

Further, a silicate may be used for the composition of the invention. The silicate works as a crosslinking agent and has a function of improving the recovery, durability, and creep resistance of the organic polymer of the component (A) of the invention. Further, it also has a function to improve the adhesion and water-proof adhesion, and adhesion durability at a high temperature and high humidity condition. Tetraalkoxysilane or partially hydrolyzed condensates of the tetraalkoxysilane may be used as the silicate. In the case where a silicate is used, the use amount thereof is preferably 0.1 to 20 parts by weight and more preferably 0.5 to 10 parts by weight per 100 parts by weight of the organic polymer of the component (A).

Specific examples of the silicates are tetraalkoxysilanes (tetraalkyl silicates) such as tetramethoxysilane, tetraethoxysilane, ethoxytrimethoxysilane, dimethoxydiethoxysilane, methoxytriethoxysilane, tetra(n-propoxy)silane, tetra(iso-propoxy)silane, tetra(n-butoxy)silane, tetra(iso-butoxy)silane, and tetra(tert-butoxysilane), and their partially hydrolyzed condensates.

The partially hydrolyzed condensates of the tetraalkoxysilanes are more preferable since the condensates are more effective to improve the recovery, durability and creep resistance of the invention than tetraalkoxysilanes.

The above-mentioned partially hydrolyzed condensates of the tetraalkoxysilanes are obtained by a common method of adding water to a tetralkoxysilane and thereby partially hydrolyzing and condensing the tetraalkoxysilane. Further, commercialized products may be used as the partially hydrolyzed condensates of the organosilicate compounds. Examples of the condensates are Methyl silicate 51 and Ethyl silicate 40 (both manufactured by Colcoat Co., Ltd.), and the like.

A plasticizer may be used in the composition of the present invention. Addition of the plasticizer may adjust the viscosity and slump property of the curable composition, and the mechanical properties such as tensile strength and elongation property of the cured product obtained from the curable composition. As example of the plasticizer, there may be mentioned phthalic acid esters such as dibutyl phthalate, diheptyl phthalate, bis(2-ethylhexyl) phthalate, and butyl benzyl phthalate; non-aromatic dibasic acid esters such as dioctyl adipate, dioctyl sebacate, dibutyl sebacate, and diisodecyl succinate; aliphatic esters such as butyl oleate and methyl acetylricinoleate; phosphoric acid esters such as tricresyl phosphate and tributyl phosphate; trimellitic acid esters; chloroparaffins; hydrocarbon oils such as alkyldiphenyl and partially hydrogenated terphenyl; processed oils; epoxy plasticizers such as epoxylated soybean oil and benzyl epoxystearate.

Further, a polymer plasticizer may be used. If the polymer plasticizer is used, the initial physical properties can be maintained for a long duration as compared with the case of using a low molecular weight plasticizer, which is a plasticizer containing no polymer component in the molecule. Further, the drying property (also called as coatability) is also improved in the case where an alkyd coating material is applied to the cured product. Specific examples of the

polymer plasticizer are vinyl polymers obtained by polymerizing vinyl monomers by various methods; polyalkylene glycol esters such as diethylene glycol dibenzoate, triethylene glycol dibenzoate, pentaerythritol ester; polyester-type plasticizers obtained from bibasic acids such as sebacic acid, adipic acid, azelaic acid, and phthalic acid and dihydric alcohols such as ethylene glycol, diethylene glycol, triethylene glycol, propylene glycol, and dipropylene glycol; polyether polyols such as polyethylene glycol, polypropylene glycol, and polytetramethylene glycol having a molecular weight of 500 or higher and more preferably 1,000 or higher, polyether polyol derivertives obtained by converting hydroxyl groups of these polyether polyols into ester groups, ether groups or the like, and the like polyethers; polystyrenes such as polystyrene and poly($\alpha$-methylstyrene); polybutadiene, polybutene, polyisobutylene, butadiene-acrylonitrile, polychloroprene and the like, however the polymer plasticizer is not limited to these examples.

Among the exemplified polymer plasticizers, those which are compatible with the polymer of the component (A) are preferable. From this viewpoint, polyethers and vinyl polymers are preferable. Further, from the viewpoint where the surface curability and deep part curability are improved and curing delay after storage does not occur, polyethers are preferablly used and polypropylene glycol is more preferablly used as a plasticizer. Additionally, in terms of the compatibility, weather resistance, and heat resistance, vinyl polymers are preferable. Among vinyl polymers, acrylic polymers and/or methacrylic polymers are preferable and acrylic polymers such as polyacrylic alkyl esters are more preferable. A synthesis method of the polymers is preferably a living radical polymerization method and more preferably an atom transfer radical polymerization method since these are suitable for narrowing the molecular weight distribution and lowering the viscosity. Also, a polymer obtained by so-called SGO process, that is a polymer obtained by continuous bulk polymerization of an acrylic alkyl ester monomer at high temperature and high pressure as described in Japanese Kokai Publication 2001-207157 is preferablly used.

The number average molecular weight of the polymer plasticizer is preferably 500 to 15,000, more preferably 800 to 10,000, furthermore preferably 1,000 to 8,000, even more preferably 1,000 to 5,000, and most preferably 1,000 to 3,000. If the molecular weight is too low, the plasticizer is eluted by heat or rain fall with the lapse of time so as to fail to maintain the initial physical properties for a long duration and therefore fail to improve the alkyd coatability. If the molecular weight of the polymer is too high, the viscosity is increased to worsen the workability. Although the molecular weight distribution of the polymer plasticizer is not particularly limited, it is preferably narrow and preferably lower than 1.80. It is further preferably 1.70 or lower, furthermore preferably 1.60 or lower, even more preferably 1.50 or lower, particularly preferably 1.40 or lower, and most preferably 1.30 or lower.

The number average molecular weight is measured by a GPC method in the case of a vinyl polymer and by a terminal group analysis method in the case of a polyether polymer. The molecular weight distribution (Mw/Mn) is measured by the GPC method (conversion into polystyrene).

The polymer plasticizer may or may not contain the reactive silicon group. In the case of containing the reactive silicon group, it works as a reactive plasticizer and prevents transfer of the plasticizer from the cured product. In the case where the reactive silicon group is contained, the number of the group is preferably 1 or lower and more preferably 0.8 or lower on average per one molecule. In the case where the plasticizer having a reactive silicon group, particularly an oxyalkylene polymer having a reactive silicon group, is used, the number average molecular weight thereof is necessarily to be lower than that of the polymer of the component (A).

The plasticizer may be used alone or two or more of these may be used in combination. Further, a low molecular weight plasticizer and the polymer plasticizer may be used in combination. These plasticizers may be added at the time of polymer production.

The use amount of the plasticizer is 5 to 150 parts by weight, preferably 10 to 120 parts by weight, and more preferably 20 to 100 parts by weight, per 100 parts by weight of the organic polymer of the component (A). If it is less than 5 parts by weight, the effect as a plasticizer is not exhibited and if it exceeds 150 parts by weight, the mechanical strength of the cured product becomes insufficient.

Also, thermally-expansive hollow microspheres described in Japanese Kokai Publication 2004-51701, Japanese Kokai Publication 2004-66749 and the like can be used. The phrase "thermally-expansive hollow microspheres" means plastic spheres obtained by spherically enclosing low boiling point compounds such as a hydrocarbon with 1 to 5 carbon atoms by a polymer coating material (vinylidene chloride copolymer, an acrylonitrile copolymer, or a vinylidene chloride-acrylonitrile copolymer). Heating of the adhesion part formed using the composition of the invention increases the gas pressure in the coat of the thermally-expansive hollow microspheres and softens the polymer coating material to drastically expand the volume and separate the adhesion interface. Addition of the thermally-expansive hollow microspheres gives a thermally peelable adhesive composition which can be easily peeled by heating at the time of disposal without breaking materials and using any organic solvents.

The composition of the invention may contain a pressure-sensitive adhesion promoter. The pressure-sensitive adhesion promoter is not particularly limited and commonly used ones may be used regardless of the phase thereof being solid or liquid at an ambient temperature. Specific examples thereof may be styrene block copolymers, hydrogenated products thereof, phenol resins, modified phenol resins (e.g. cashew oil-modified phenol resins, tall oil-modified phenol resins, and the like), terpene phenol resins, xylene-phenol resins, cyclopentadiene-phenol resins, cumarone

indene resins, rosin resins, rosin ester resins, hydrogenated rosin ester resins, xylene resins, low molecular weight polystyrene resins, styrene copolymer resins, petroleum resins (e.g., C5 hydrocarbon resins, C9 hydrocarbon resins, C5 hydrocarbon-C9 hydrocarbon copolymer resins, and the like), hydrogenated petroleum resins, terpene resins, DCPD resins petroleum resins, and the like. They may be used alone and two or more of them may be used in combination. Examples of the styrene block copolymers and the hydrogenated products thereof are styrene-butadiene-styrene block copolymer (SBS), styrene-isoprene-styrene block copolymer (SIS), styrene-ethylene-butylene-styrene block copolymer (SEBS), styrene-ethylene-propylene-styrene block copolymer (SEPS), styrene-isobutylene-styrene block copolymer (SIBS), and the like. The above-mentioned pressure-sensitive adhesion promoters may be used alone or two or more of them may be used in combination.

The pressure-sensitive adhesion promoter may be used in a range from 5 to 1,000 parts by weight and preferably 10 to 100 parts by weight per 100 parts by weight of the component (A).

The composition of the invention may contain a solvent or a diluent. The solvent or diluent is not particularly limited and aliphatic hydrocarbons, aromatic hydrocarbons, alicyclic hydrocarbons, halogenated hydrocarbons, alcohols, esters, ketones, ethers and the like may be used. In the case where a solvent or diluent is used, in terms of air pollution at the time of using the composition indoors, the boiling point of the solvent is preferably 150°C or higher, more preferably 200°C or higher, and further preferably 250°C or higher. The above-mentioned solvents or diluents may be used alone or two or more of them may be used in combination.

Based on the necessity, the curable composition of the invention may contain a physical property modifier for adjusting tensile properties of the cured product to be obtained. The physical property modifier is not particularly limited and examples thereof are alkylalkoxysilanes such as methyltrimethoxysilane, dimethyldimethoxysilane, trimethylmethoxysilane, and n-propyltrimethoxysilane; alkylisopropenoxysilanes such as dimethyldiisopropenoxysilane, methyltriisopropenoxysilane, γ-glycidoxypropylmethyldiisopropenoxysilane; functional group-containing alkoxysilanes such as γ-glycidoxypropylmethyldimethoxysilane, γ-glycidoxypropyltrimethoxysilane, vinyltrimethoxysilane, vinyldimethylmethoxysilane, γ-aminopropyltrimethoxysilane, N-(β-aminoethyl)aminopropylmethyldimethoxysilane, γ-mercaptopropyltrimethoxysilane, γ-mercaptopropylmethyldimethoxysilane; silicone vanishes; polysiloxanes; and the like. Use of the above-mentioned physical property modifiers increases the hardness of the cured product obtained by curing the composition of the invention, or, on the contrary, decreases the hardness in order to increase the elongation at break. The above-mentioned physical property modifiers may be used alone or two or more of them may be used in combination.

Particularly, a compound from which a compound containing a monovalent silanol group in a molecule is produced by hydrolysis has a function of decreasing the modulus of the cured product without worsening the stickiness of the cured product surface. Particularly, a compound from which trimethylsilanol is produced is preferable. Examples of the compound from which a compound containing a monovalent silanol group in a molecule is produced by hydrolysis are compounds described in Japanese Kokai Publication Hei-5-117521. Further, examples of the compound may include derivatives of alkylalcohols, such as hexanol, octanol and decanol, from which silicon compounds forming $R_3SiOH$ such as trimethylsilanol are produced by hydrolysis; derivatives of polyhydric alcohols having 3 or more hydroxyl groups, such as trimethylolpropane, glycerin, pentaerythritol and sorbitol, as described in Japanese Kokai Publication Hei-11-241029, from which silicone compounds forming $R_3SiOH$ such as trimethylsilanol are produced by hydrolysis.

Examples may further include oxypropylene polymer derivatives as described in Japanese Kokai Publication Hei-7-258534 from which silicon compounds forming $R_3SiOH$ such as trimethylsilanol are produced by hydrolysis. Usable examples may also include polymers having a silicon-containing group to be converted into monosilanol-containing compounds by hydrolysis with a crosslinkable and hydrolysable silicon-containing group, as described in Japanese Kokai Publication Hei-6-279693.

The physical property modifier is used in a range from 0.1 to 20 parts by weight and preferably from 0.5 to 10 parts by weight per 100 parts by weight of the organic polymer (A) having a reactive silicon group.

The curable composition of the invention may contain a thixotropic agent (antisagging agent) for preventing sagging in order to improve the workability, according to need. The antisagging agent is not particularly limited and polyamide waxes; hydrogenated castor oil derivatives; metal soaps such as calcium stearate, aluminum stearate, and barium stearate; and the like. Further, if rubber powders with a particle diameter of 10 to 500 μm as described in Japanese Kokai Publication Hei-11-349916 and/or organic fibers as described in Japanese Kokai Publication 2003-155389 are used, the composition with high thixotropy and good workability can be obtained. These thixotropic agents (antisagging agents) may be used alone or two or more of them may be used in combination. The thixotropic agent may be used in a range from 0.1 to 20 parts by weight per 100 parts by weight of the total of the component (A) and the component (B).

The composition of the invention may contain a compound having an epoxy group in one molecule. Addition of the compound having an epoxy group increases the recovery of the cured product. Examples of the compound having an epoxy group may include epoxylated unsaturated fats and oils, epoxylated unsaturated fatty acid esters, alicyclic epoxy compounds and epichlorohydrin derivatives, mixtures of these compounds, and the like. More particular examples thereof are epoxylated soybean oils, epoxylated linseed oil, bis(2-ethylhexyl)-4,5-epoxycyclohexane-1,2-dicarboxylate (E-PS), epoxyoctyl stearate, epoxybutyl stearate and the like. E-PS is particularly preferable among them. The epoxy

compound is preferablly used in a range from 0.5 to 50 parts by weight per 100 parts by weight of the organic polymer (A) having reactive silicon group.

The composition of the invention may contain a photocurable substance. Addition of the photocurable substance makes it possible to form a coating of the photocurable substance on the cured product surface and to improve the stickiness and weather resistance of the cured product. The photocurable substance is a compound causing chemical changes in the molecular structure within a very short time by light radiation and thereby causing changes in physical properties such as curing. This kind of compounds is known well in form of an organic monomer, an oligomer, a resin, a composition containing them, and many others. All kinds of commercialized products may be used. Typical examples thereof are unsaturated acrylic compounds, polyvinyl cinnamates, azido resins and the like. The unsaturated acrylic compounds may include monomers and oligomers having one or several acrylic or methacrylic unsaturated groups, and mixtures thereof; e.g. monomers and oligoesters with a molecular weight of 10,000 or lower, such as propylene (or butylene, or ethylene) glycol di(meth)acrylate and neopentyl glycol di(meth)acrylate, and the like. As more specific examples, there may be mentioned such special acrylates (difunctional) as ARONIX M-210, ARONIX M-215, ARONIX M-220, ARONIX M-233, ARONIX M-240, and ARONIX M-245; such trifunctional ones as ARONIX M-305, ARONIX M-309, ARONIX M-310, ARONIX M-315, ARONIX M-320, and ARONIX M-325; such polyfunctional ones as ARONIX M-400; and the like. Compounds containing an acrylic functional group are particularly preferable and compounds containing 3 or more functional groups on average in one molecule are more preferable. (All the above-mentioned ARONIX species are products of Toagosei Co., Ltd.)

Examples of the polyvinyl cinnamates are photosensitive resins having a cinnamoyl group as a photosensitive group and obtained by esterifying a polyvinyl alcohol with a cinnamic acid and many polyvinyl cinnamate derivatives as well. The azido resins are known as photosensitive resins having an azido group as a photosensitive group and in general, may include photosensitive rubber liquids obtained by adding a diazido compound as a photosensitizer, and further, detailed examples are found in "Kankosei Jushi (Photosensitive Resins)" (published March 17, 1972 by Insatsu Gakkai Shuppanbu, pages 93 ff, 106 ff, 117 ff). They may be used alone or as a mixture and if necessary, a sensitizer may be added. In the case where a sensitizer such as ketones and nitro compounds or a promoter such as amines is added, the effect is improved in some cases. The photocurable substance is used in a range from 0.1 to 20 parts by weight and preferably in a range from 0.5 to 10 parts by weight per 100 parts by weight of the organic polymer (A) having a reactive silicon group. If it is lower than 0.1 parts by weight, the weather resistance increasing effect is not caused and if it exceeds 20 parts by weight, the cured product tends to become so hard to cause cracks.

The composition of the invention may contain an oxygen-curable substance. The oxygen-curable substance may include unsaturated compounds reactive on oxygen in the air and has function of forming a cured coating in the vicinity of the cured product surface by reaction with oxygen in the air and thereby preventing stickiness of the surface and adhesion of the dust and dirt to the cured product surface. Specific examples of the oxygen-curable substance are dry oils represented by tung oil and linseed oil and various kinds of alkyd resins obtained by modifying these compounds; acrylic polymers, epoxy resins, and silicon resins modified by dry oils; liquid polymers such as polymers of 1,2-polybutadiene, 1,4-polybutadiene, C5-C8 diene obtained by polymerization or copolymerization of diene compounds such as butadiene, chloroprene, isoprene, and 1,3-pentadiene, liquid copolymers such as NBR and SBR obtained by copolymerization of the diene compounds with a copolymerizable monomer such as acrylonitrile and stylene in a manner that the diene compounds form main components, various modified compounds of them (e.g. maleated derivatives, boiled oil-modified derivatives, and the like), and the like. They may be used alone or two or more of them may be used in combination. Tung oil and liquid diene polymers are particularly preferable among them. Further, combination use of a catalyst promoting the oxidation curing reaction or a metal drier may increase the effect in some cases. Examples of the catalyst and the metal drier are metal salts such as cobalt naphthenate, lead naphthenate, zirconium naphthenate, cobalt octylate, and zirconium octylate, amine compounds, and the like. The use amount of the oxygen-curable substance is preferably in a range from 0.1 to 20 parts by weight and more preferably from 0.5 to 10 parts by weight per 100 parts by weight of the organic polymer (A) having a reactive silicon group. If the use amount is lower than 0.1 parts by weight, the contamination improvement effect becomes insufficient and if it exceeds 20 parts by weight, the tensile property and the like of the cured product tends to be deteriorated. As described in Japanese Kokai Publication Hei-3-160053, the oxygen-curable substance may be used preferably in combination with the photocurable substance.

The composition of the invention may contain an antioxidant (anti-aging agent). If the antioxidant is used, the heat resistance of the cured product can be increased. Examples of the antioxidant are hindered phenol-type antioxidants, monophenol-type antioxidants, bisphenol-type antioxidants, and polyphenol-type antioxidants, and hinderd phenol-type antioxidants are particularly preferable. Similarly, usable examples thereof are hindered amine-type light stabilizers commercialized as TINUVIN 622LD, TINUVIN 144, CHIMASSORB 944LD, and CHIMASSORB 119FL (all manufactured by Nihon Ciba-Geigy K.K..), MARK LA-57, MARK LA-62, MARK LA-67, MARK LA-63, and MARK LA-68 (all manufactured by Adeka Argus Chemical Co., Ltd.), Sanol LS-770, Sanol LS-765, Sanol LS-292, Sanol LS-2626, Sanol LS-1114, and Sanol LS-744 (all manufactured by Sankyo Co., Ltd.). Specific examples of the antioxidant are also described in Japanese Kokai Publication Hei-4-283259 and Japanese Kokai Publication 9-194731. The use amount of the antioxidant is preferably in a range from 0.1 to 10 parts by weight and more preferably from 0.2 to 5 parts by weight per 100 parts by weight of the organic polymer (A) having a reactive silicon group.

The composition of the invention may contain a light stabilizer. If the light stabilizer is used, the photo-oxidation deterioration of the cured product can be prevented. Examples to be used as the light stabilizer may include benzotriazole compounds, hindered amine compounds, benzoate compounds and the like, and hindered amine compounds are particularly preferable. The use amount of the light stabilizer is preferably in a range from 0.1 to 10 parts by weight and more preferably from 0.2 to 5 parts by weight per 100 parts by weight of the organic polymer (A) having a reactive silicon group. Specific examples of the light stabilizer are also described in Japanese Kokai Publication Hei-9-194731.

In the case where the photocurable substance is added to the composition of the invention, particularly in the case where an unsaturated acrylic compound is added, it is preferable to use a tertiary amine-containing hindered amine-type light stabilizer as described in Japanese Kokai Publication Hei-5-70531 as the hindered amine-type light stabilizer in terms of the improvement of the storage stability of the composition. Examples of the tertiary amine-containing hindered amine-type light stabilizer are TINUVIN 622LD, TINUVIN 144, and CHIMASSORB 119FL (all manufactured by Nihon Ciba-Geigy K.K..); MARK LA-57, LA-62, LA-67, and LA-63 (all manufactured by Adeka Argus Chemical Co., Ltd.); Sanol LS-765, LS-292, LS-2626, LS-1114, and LS-744 (all manufactured by Sankyo Co., Ltd.); and the like stabilizers.

The composition of the invention may contain an ultraviolet absorber. Use of the ultraviolet absorber can increase the weather resistance of the surface of the cured product. Examples of the ultraviolet absorber may be benzophenone compounds, benzotriazole compounds, salicylate compounds, substituted tolyl compounds, metal chelate compounds and the like, and benzotriazole compounds are particularly preferable. The use amount of the ultraviolet absorber is preferably in a range from 0.1 to 10 parts by weight and more preferably from 0.2 to 5 parts by weight per 100 parts by weight of the organic polymer (A) having a reactive silicon group. It is preferable to use a phenol-type or hindered phenol-type antioxidant, a hindered amine-type light stabilizer, and a benzotriazole-type ultraviolet absorber in combination.

The composition of the invention may contain an epoxy resin. The composition containing the epoxy resin is preferablly used as an adhesive, particularly as an adhesive for exterior wall tiles. Examples of the epoxy resin are epichlorohydrin-bisphenol A epoxy resins, epichlorohydrin-bisphenol F epoxy resins, flame-retardant epoxy resins such as tetrabromobisphenol A glycidyl ether, novolak epoxy resins, hydrogenated bisphenol A epoxy resins, glycidyl ether epoxy resins of a bisphenol A propyleneoxide adduct, p-oxybenzoic acid glycidyl ether ester epoxy resins, m-aminophenol epoxy resins, diaminodiphenylmethane epoxy resins, urethane-modified epoxy resins, various kinds of alicyclic epoxy resins, N,N-diglycidylaniline, N,N-diglycidyl-o-toluidine, triglycidyl isocyanurate, polyalkylene glycol diglycidyl ether, glycidyl ether of polyhydric alcohols such as glycerin, hydantoin epoxy reins, epoxides of unsaturated polymers such as petroleum resins, and the like, however the epoxy resin is not limited to these examples and commonly used epoxy resins are all usable. Those having two or more epoxy groups in a molecule have high reactivity at the time of curing and make the cured product easy to form a three-dimensional mesh structure, and therefore they are preferable. More preferable examples thereof are bisphenol A epoxy resins, novolak epoxy resins and the like. The use ratio of these epoxy resins and the organic polymer (A) having a reactive silicon group is in a range from (100/1) to (1/100) on the basis of (A) / (epoxy resins) by weight. If the ratio (A)/(epoxy resins) is lower than 1/100, it becomes difficult to cause an effect of improving the impact strength and strong toughness of the epoxy resin cured product and if the ratio (A) / (epoxy resins) exceeds 100/1, the strength of the organic polymer cured product becomes insufficient. A preferable use ratio cannot be defined clearly since it depends on the uses of the curable resin composition, however in the case of improving impact resistance, flexibility, strong toughness, peel strength and the like of the epoxy resin cured product, the component (A) is preferably used in a range from 1 to 100 parts by weight and more preferably from 5 to 100 parts by weight per 100 parts by weight of the epoxy resins. On the other hand, in the case of improving strength of the cured product of the component (A), the epoxy resins are preferably used in a range from 1 to 200 parts by weight and more preferably from 5 to 100 parts by weight per 100 parts by weight of the component (A).

In the case where the epoxy resin is added, the composition of the invention may naturally contain a curing agent for curing the epoxy resin. Examples of the epoxy resin curing agent are not particularly limited and commonly used epoxy resin curing agents may be used. Specific examples thereof are primary and secondary amines such as triethylenetetramine, tetraethylenepentamine, diethylaminopropylamine, N-aminoethylpiperidine, m-xylylenediamine, m-phenylenediamine, diaminodiphenylmethane, diaminodiphenylsulfone, isophoronediamine, amine-terminated polyethers; tertiary amines such as 2,4,6-tris(dimethylaminomethyl)phenol, and tripropylamine and salts of these tertiary amines; polyamide resins; imidazoles; dicyanodiamides; boron trifluoride complex compounds; carboxylic anhydrides such as phthalic anhydride, hexahydrophthalic anhydride, tetrahydrophthalic anhydride, dodecinyl succinic anhydride, pyromellitic anhydride, and chlorendic anhydride; alcohols; phenols; carboxylic acids; diketone complexes of aluminum or zirconium; and the like compounds, however the epoxy resin is not limited to these examples and the curing agent is used alone or two or more of them are used in combination.

In the case of using the curing agent for the epoxy resin, the use amount is in a range from 0.1 to 300 parts by weight per 100 parts by weight of the epoxy resin.

A ketimine may be used as the curing agent for the epoxy resin. The ketimine is stable in water-free state, and is decomposed into a primary amine and a ketone by water and the produced primary amine is a curing agent for the epoxy resin curable at a room temperature. If the ketimine is used, the one package composition may be obtained. The ketimine can be obtained by condensation reaction of an amine compound and a carbonyl compound.

Synthesis of the ketimine may be carried out using a conventionally known amine compound and carbonyl compound and examples of the amine compound are diamines such as ethylenediamine, propylenediamine, trimethylenediamine, tetramethylenediamine, 1,3-diaminobutane, 2,3-diaminobutane, pentamethylenediamine, 2,4-diaminopentane, hexamethylenediamine, p-phenylenediamine, and p,p'-biphenylenediamine; polyamines such as 1,2,3-triaminopropane, triaminobenzene, tris(2-aminoethyl)amine, and tetrakis(aminomethyl)methane; polyalkylene polyamines such as diethylenetriamine, triethylenetriamine, and tetraethylenepentamine; polyoxyalkylene polyamines; aminosilanes such as γ-aminopropyltriethoxysilane, N-(β-aminoethyl)-γ-aminopropyltrimethoxysilane, and N-(β-aminoethyl)-γ-aminopropylmethyldimethoxysilane; and the like. Examples of the carbonyl compound are aldehydes such as acetaldehyde, propionaldehyde, n-butylaldehyde, isobutylaldehyde, diethylacetaldehyde, glyoxal, and benzaldehyde; cyclic ketones such as cyclopentanone, trimethylcyclopentanone, cyclohexanone, and trimethylcyclohexanone; aliphatic ketones such as acetone, methyl ethyl ketone, methyl propyl ketone, methyl isopropyl ketone, methyl isobutyl ketone, diethyl ketone, dipropyl ketone, diisopropyl ketone, dibutyl ketone, and diisobutyl ketone; β-dicarbonyl compounds such as acetyl acetone, methyl acetoacetate, ethyl acetoacetate, dimethyl malonate, diethyl malonate, methyl ethyl malonate, and dibenzoylmethane; and the like.

In the case where an imino group is contained in the ketimine, the imino group may be reacted with styrene oxide; glycidyl ethers such as butyl glycidyl ether and allyl glycidyl ether; glycidyl esters; and the like. The above-mentioned ketimines may be used alone or two or more of them may be used in combination. The use amount of the ketimine is in a range from 1 to 100 parts by weight per 100 parts by weight of the epoxy resin and it differs depending on the types of the epoxy resin and ketimine.

The curable composition of the invention may contain a phosphorus-type plasticizer such as ammonium polyphosphate and tricresyl phosphate and a flame retardant such as aluminum hydroxide, magnesium hydroxide, and thermally expansive graphite. The above-mentioned flame retardant may be used alone or two or more of them may be used in combination.

The flame retardant is used in a range from 5 to 200 parts by weight and more preferably from 10 to 100 parts by weight per 100 parts by weight of the component (A).

The curable composition of the invention may contain various kinds of additives for adjusting the various physical properties of the curable composition or the cured product according to need. Examples of the additives are a curability adjustment agent, a radical inhibitor, a metal inactivation agent, an ozone deterioration-preventing agent, a phosphorus-type peroxide decomposing agent, a lubricant, a pigment, a foaming agent, a repellent for ants, anti-fungal agent and the like. These various additives may be used alone or two or more of them may be used in combination. Specific examples other than the examples of the additives described in this specification are described in Japanese Kokoku Publication Hei-4-69659, Japanese Kokoku Publication Hei-7-108928, Japanese Kokai Publication Sho-63-254149, Japanese Kokai Publication Sho-64-22904, Japanese Kokai Publication 2001-72854 and the like.

The curable composition of the invention is the one package curable composition which is air-tightly stored after all of the components are previously mixed and is to be cured by water in the air after application thereof. The water content in the composition is essentially required to be 2,000 ppm or lower, preferably 1,500 ppm or lower, more preferably 1,000 ppm or lower, and even more preferably 500 ppm or lower. In the case where the water content is higher than 2,000 ppm, the adhesion tends to be worsened.

The water content of the curable composition is measured by a quantitative water content measurement method using Karl Fischer reagent.

The quantitative water content measurement by the above-mentioned method can be carried out in the following manner. That is, about 50 ml of a dehydrating solvent mixture composed of chloroform and methanol (dehydrating solvent CM, manufactured by Mitsubishi Chemical Corporation) is fed to a titration flask in the Karl Fischer water analyzer (MK-A II, manufactured by KYOTO ELECTRONICS MANUFACTURING CO., LTD.) and then Karl Fischer reagent (Karl Fischer Reagent SS, manufactured by Mitsubishi Chemical Corporation) is added dropwise thereto until titration completion where all water is removed from the titration flask. Next, about 0.5 g of the curable composition of the invention is added to and dissolved in the above-mentioned dehydrating solvent and then, while being stirred thoroughly, titration is carried out using the Karl Fischer reagent, the titer (0.5 to 4.0 mg $H_2O$/ml) of which has previously been determined. The water content (W (ppm)) in the curable composition can be calculated according to the following equation from the titration value (B (ml)), the titer of the reagent (F (mg $H_2O$/ml)), and the amount of sampled curable composition of the invention (A (mg)):

$$W\ (ppm) = B \times F \div A \times 10^6.$$

In the case where the one package curable composition is prepared, since all of the components are previously mixed, it is preferable to previously dehydrate and dry the components containing water prior to use or to carry out dehydration by vacuum etc. during the components are kneaded. In the case where the composition is a powder or the like solid, the dehydration and drying method is preferably heat drying or vacuum dehydration and in the case where it is liquid, vacuum dehydration or dehydration using a synthetic zeolite, activated alumina, silica gel, burnt lime, magnesium oxide or the like is preferable. In addition to the above-mentioned dehydration and drying methods, an alkoxysilane compound such as n-propyltrimethoxysilane, vinyltrimethoxysilane, vinylmethyldimethoxysilane, methyl silicate, ethyl silicate, γ-mercaptopropylmethyldimethoxysilane, γ-mercaptopropylmethyldiethoxysilane, and γ-glycidoxypropyltrimethoxysilane may be added in order to cause reaction with water for dehydration. Alternatively, an oxazolidine compound such as 3-ethyl-2-methyl-2-(3-methylbutyl)-1,3-oxazolidine may be added and reacted with water for dehydration. Further, a small amount of an isocyanate compound may be added in order to cause reaction of its isocyanate group with water for dehydration. Addition of the alkoxysilane compound, the oxazolidine compound, and the isocyanate compound improve the storage stability.

The use amount of a dehydration agent, particularly a silicon compound reactive with water such as vinyltrimethoxysilane is preferably in a range from 0.1 to 20 parts by weight and more preferably from 0.5 to 10 parts by weight per 100 parts by weight of the organic polymer (A) having a reactive silicon group.

The method for producing the curable composition of the invention is not particularly limited and a common method may be employed which involves, for example, formulating the above-mentioned components, kneading the components by a mixer, a roll, a kneader or the like at an ambient temperature or under heating condition; or dissolving the components by adding a small amount of a proper solvent for mixing.

When the curable composition of the invention is exposed to the atmosphere, the composition forms a three-dimensional mesh structure by reaction with water and then is cured into a solid having rubber-like elasticity.

The curable composition of the invention is usable for pressure sensitive adhesives, sealants for buildings and constructions, ships, automobiles and roads etc., adhesives, framing agents, materials for vibration absorption, materials for vibration suppression, materials for noise reduction, foamed materials, paints, spraying materials and the like. The curable composition of the invention is more preferable to be used as sealants or adhesives among them since the cured product obtained by curing the composition is excellent in flexibility and adhesion.

Further, the curable composition is usable for various uses, for example electric and electronic parts such as sealants for rear faces of solar cells; insulating materials such as insulating coating materials for electric wires and cables; elastic adhesives, contact adhesives, spraying sealants, crack repairing materials, adhesives for tiles, powdery coating materials, casting materials, rubber materials for medical use, pressure sensitive adhesives for medical use, sealants for medical appliances, packaging materials for food, joint sealants for exterior materials such as a siding board, coating materials, primers, conductive materials for shielding electromagnetic wave, heat conductive materials, hot melt materials, electric and electronic potting agents, films, gaskets, various kinds of molding materials, rustproof and waterproof sealants for end faces (cut sections) of net glass or laminated glass, liquid sealants used in automobile parts, electric parts, various kinds of machine parts and the like, and the like. Further, since the curable composition can be closely stuck to a wide range of substrates such as glass, ceramics, wood, metals, and resin molded products by itself or with assist of a primer, it is also usable as various types of hermetically sealing compositions and adhesive compositions. The curable composition of the invention may be used as adhesives for interior panels, adhesives for exterior panels, adhesives for tiles, adhesives for stone material lining, adhesives for ceiling finishing, adhesives for floor finishing, adhesives for wall finishing, adhesives for vehicle panels, adhesives for assembly of electric apparatus/electronic apparatus/precision apparatus, sealants for direct grading, sealants for pair glass, sealants for SSG process, sealants for working joints of buildings and constructions, and the like.

BEST MODE FOR CARRYING OUT THE INVENTION

Next, the invention will be described more in detail with reference to Examples and Comparative Examples, however the invention should not be limited to these examples.

(Synthesis Example 1)

Propylene oxide was polymerized by using polyoxypropylene diol with a molecular weight of about 2,000 as an initiator and a zinc hexacyanocobaltate-glyme complex catalyst in order to obtain a polypropylene oxide with a number average molecular weight of about 25,500 (measured by using HLC-8120 GPC manufactured by Tosoh Corporation as

a solution transporting system; TSK-GEL H column manufactured by Tosoh Corporation as a column; and THF as a solvent: the molecular weight was determined on the basis of conversion into polystyrene). Next, a NaOMe methanol solution of which the NaOMe content was 1.2 equivalent weights relative to the hydroxyl groups of the hydroxyl group-terminated polypropylene oxide was added followed by removal of methanol, and then allyl chloride was added thereto in order to convert the terminal hydroxyl groups of the hydroxyl group-terminated polypropylene oxide into allyl groups. Unreacted allyl chloride was then removed by vacuum evaporation. 300 parts by weight of n-hexane and 300 parts by weight of water were added to 100 parts by weight of the allyl group-terminated unpurified polypropylene oxide thus obtained, the obtained mixture was stirred, and then water was removed by centrifugation. After that, 300 parts by weight of water was further added to the obtained hexane solution with stirring, water was removed again by centrifugation and successively, hexane was removed by vacuum evaporation in order to obtain an allyl group-terminated bifunctional polypropylene oxide with a number average molecular weight of about 25,500 (hereinafter, referred to as "polymer P").

Using 150 ppm of an isopropanol solution of a platinum-vinylsiloxane complex with 3% by weight of platinum content as a catalyst, 100 parts by weight of the polymer P was reacted with 0.93 parts by weight of methyldimethoxysilane at 90°C for 5 hours to obtain a methyldimethoxysilyl group-terminated polyoxypropylene polymer (A-1). Further, the ratio (defined as S) of the peak integration value of the terminal allyl group ($-CH_2-CH=CH_2$) (near 5.1 ppm) relative to the peak integration value of the methyl group (near 1.2 ppm) of the polypropylene oxide main chain of the polymer P and the ratio (defined as S') of the peak integration value of the methylene group ($-CH_2-CH_2-CH_2-Si(CH_3)(OCH_3)_2$) (near 0. 6 ppm) bonded to the silicon atom of the terminal silyl group relative to the peak integration value of the methyl group (near 1.2 ppm) of the polypropylene oxide main chain of the silyl group-terminated polypropylene oxide (A-1) after hydrosilylation reaction were determined by $^1$H-NMR measurement (measured by using NM-LA 400 manufactured by Nippon Electric Co., Ltd., and in $CDCl_3$ solvent). Then, the silyl group introduction ratio (S'/S) was determined to find that 1.3 terminal methyldimethoxysilyl groups were introduced per one molecule on average.

(Synthesis Example 2)

Using 150 ppm of an isopropanol solution of a platinum-vinylsiloxane complex with a platinum content of 3% by weight as a catalyst, 100 parts by weight of the polymer P was reacted with 1.1 parts by weight of trimethoxysilane at 90°C for 5 hours to obtain a polyoxypropylene polymer (A-2) having 1.3 terminal trimethoxysilyl groups on average.

(Synthesis Example 3)

Propylene oxide was polymerized by using polyoxypropylene diol with a molecular weight of about 2,000 as an initiator and a zinc hexacyanocobaltate-glyme complex catalyst in order to obtain a hydroxyl group-terminated bifunctional polypropylene oxide (hereinafter, referred to as "polymer Q") with a number average molecular weight of about 25,500 (measured by using HLC-8120 GPC manufactured by Tosoh Corporation as a solution transporting system; TSK-GEL H column manufactured by Tosoh Corporation as a column; and THF as a solvent: the molecular weight was determined on the basis of conversion into polystyrene).

100 parts by weight of the polymer Q was reacted with 1.8 parts by weight of γ-isocyanatopropyltrimethoxysilane at 90°C for 5 hours to obtain a trimethoxysilyl group-terminated polyoxypropylene polymer (A-3). Further, the ratio (defined as T) of the peak integration value (before reaction) of the terminal hydroxyl group (-OH) (near 3.8 ppm) and the ratio (defined as T') of the peak integration value (after reaction), both of these ratio being relative to the peak integration value of the methyl group (near 1.2 ppm) of the polypropylene oxide main chain of the polymer Q, were determined by $^1$H-NMR measurement (measured by using NM-LA 400 manufactured by Nippon Electric Co., Ltd., and in $CDCl_3$ solvent). Then, the silyl group introduction ratio (T - T' /T) was determined to find that 1.4 terminal trimethoxysilyl groups were introduced per one molecule on average.

(Synthesis Example 4)

Propylene oxide was polymerized by using polyoxypropylene glycol with a molecular weight of about 2, 000 as an initiator and a zinc hexacyanocobaltate-glyme complex catalyst. By using the hydroxyl group-terminated polypropylene oxide with a number average molecular weight of about 37,500 thus obtained, an allyl group-terminated polypropylene oxide was obtained in the same manner as in Synthesis Example 1. This allyl group-terminated polypropylene oxide was reacted with 0.54 part by weight of methyldimethoxysilane in the same manner as in Synthesis Example 1 to obtain a polyoxypropylene polymer (A-4) having 1.1 terminal methyldimethoxysilyl groups on average.

(Examples 1 to 4 and Comparative Examples 1 to 5)

Each of 100 parts by weight of the polymers (A-1) to (A-3) respectively obtained in Synthesis Examples 1 to 3

as the component (A) was keaded respectively, under dehydration condition, with 120 parts by weight of surface-treated colloidal calcium carbonate (Hakuenka CCR, manufactured by Shiraishi Kogyo Kaisha, Ltd.) and 20 parts by weight of titanium oxide (Tipaque R-820, manufactured by Ishihara Sangyo Kaisha Ltd.) as the components (C), 55 parts by weight of diisodecyl phthalate (Sansocizer DIDP, manufactured by New Japan Chemical Co., Ltd.) as a plasticizer, 2 parts by weight of a thixotropic agent (DISPARLON 6500, manufactured by Kusumoto Chemicals, Ltd.), 1 part by weight of an ultraviolet absorber (TINUVIN 327, manufactured by Ciba Specialty Chemicals), 1 part by weight of a light stabilizer (Sanol LS-770, manufactured by Sankyo Co., Ltd.), 2 parts by weight of vinyltrimethoxysilane (A-171, manufactured by Dow Corning Toray Co., Ltd.) as a dehydration agent, and 3 parts by weight of N-(β-aminoethyl)-γ-aminopropyltrimethoxysilane (A-1120, manufactured by Dow Corning Toray Co., Ltd.) as the component (D). A-1120 was not used in Comparative Example 3 and 3 parts by weight of γ-mercaptopropyltrimethoxysilane (A-189, manufactured by Dow Corning Toray Co., Ltd.) was added in place of A-1120 in Comparative Example 4. Finally, neodecanoic acid (Versatic 10, manufactured by Japan Epoxy Resin Co., Ltd.) as the component (B) and 3-diethylaminopropylamine (manufactured by Wako Pure Chemical Industries, Ltd.) as the component (E) were added in accordance with the formulation shown in Table 1 and then each of the obtained mixtures was mixed followed by being air-tightly stored in respective waterproof containers to obtain respective one package curable compositions. Each of the produced one package curable compositions was subjected to evaluations for the water content in the composition, curability (time required for skinning), and adhesion. In Comparative Example 5, all components were kneaded without dehydration to obtain a one package curable composition. Since a large quantity of water was contained in the composition of Comparative Example 5, the following evaluations were carried out without storage after production thereof (that is, before the viscosity was increased).

(Water content measurement)

Each composition extruded out of a cartridge was subjected to water content measurement by a Karl Fischer water analyzer (MK-II, manufactured by Kyoto Electronics Manufacturing Co., Ltd.). The results are shown in Table 1.

(Curability test)

Each curable composition was extruded out of the cartridge and filled into a mold with a thickness of about 5 mm using a spatula, and then the surface of the composition was leveled to be flat. This moment was defined as the curing starting time. The surface was touched with the spatula and the moment when the mixture was not stuck to the spatula any more was determined as the time required for skinning. The time required for skinning was determined under the condition at 23°C and 50% RH. The results are shown in Table 1.

(Adhesion test)

Each curable composition was extruded out of the cartridge in a manner that the composition was closely stuck to various kinds of adherends (a steel plate, a polyvinyl chloride-steel plate, a slate board) to produce specimens. After the produced specimens were aged at 23°C for 7 days, a 90-degree hand peeling test was carried out for adhesion evaluation. Evaluation was carried out on the basis of failure modes as follows: the state where the cohesive failure ratio was from 80% or higher to 100% was determined as A, the state where it was from 20% or higher to lower than 80% was determined as B, and the state where it was from 0% to lower than 20% was determined as C. The results are shown in Table 1.

Table 1 shows the compositions of Examples 1 to 4 and Comparative Examples 1 to 5, the total amount (mmol) of carbonyl group composing an acid group in the component (B) per 100 g of the component (A), water content (ppm) in each composition, curability (time required for skinning), and evaluation results of adhesion.

Table 1

| Composition (parts by weight) | | Example | | | | Comparative Example | | | | |
|---|---|---|---|---|---|---|---|---|---|---|
| | | 1 | 2 | 3 | 4 | 1 | 2 | 3 | 4 | 5 |
| Component (A) | A-1 | 100 | | | | 100 | | 100 | 100 | 100 |
| | A-2 | | 100 | | | | 100 | | | |
| | A-3 | | | 100 | 100 | | | | | |
| Component (C) | Hakuenka CCR | 120 | 120 | 120 | 120 | 120 | 120 | 120 | 120 | 120 |
| | Tipaque R-820 | 20 | 20 | 20 | 20 | 20 | 20 | 20 | 20 | 20 |
| Plasticizer | Sansocizer DIDP | 55 | 55 | 55 | 55 | 55 | 55 | 55 | 55 | 55 |
| Thixotropic agent | DISPARLON 6500 | 2 | 2 | 2 | 2 | 2 | 2 | 2 | 2 | 2 |
| Ultraviolet absorber | TINUVIN 327 | 1 | 1 | 1 | 1 | 1 | 1 | 1 | 1 | 1 |
| Light stabilizer | Sanol LS 770 | 1 | 1 | 1 | 1 | 1 | 1 | 1 | 1 | 1 |
| Dehydration agent | A-171 | 2 | 2 | 2 | 2 | 2 | 2 | 2 | 2 | 2 |
| Component (D) | A-1120 | 3 | 3 | 3 | 3 | 3 | 3 | | | 3 |
| Mercaptosilane | A-189 | | | | | | | | 3 | |
| Component (B) | Versatic 10 | 1.25 | 1.25 | 1.25 | 0.625 | 2.5 | 2.5 | 1.25 | 1.25 | 1.25 |
| Component (E) | 3-Diethylaminopropylamine | 0.5 | 0.5 | 0.5 | 0.25 | 1 | 1 | 0.5 | 0.5 | 0.5 |
| Total amount (mmol) of carbonyl group composing acid group in component (B) per 100 g of component (A) | | 7.3 | 7.3 | 7.3 | 3.6 | 14.5 | 14.5 | 7.3 | 7.3 | 7.3 |
| Dehydration of composition | | Yes | Yes | Yes | Yes | Yes | Yes | Yes | Yes | No |
| Water content in com | position (ppm) | 400 | 400 | 450 | 400 | 500 | 400 | 400 | 400 | 3500 |
| Curability | Time required for skinning (min) | 250 | 180 | 85 | 330 | 120 | 68 | 130 | 160 | 150 |
| | Steel plate | A | A | A | A | C | C | C | C | C |
| Adhesion | Polyvinyl chloride-coated steel plate | B | B | B | B | C | C | C | C | C |
| | Slate board | A | A | A | B | C | C | C | C | C |

As shown in Table 1, each of the one package curable compositions (Examples 1 to 4) containing the aminosilane coupling agent of the component (D), and having a low water content (2,000 ppm or lower) in each composition, and total amount of carbonyl group composing an acid group in the component (B) per 100 g of the component (A) of 12 mmol or lower were found to show good adhesion to the respective adherends even though the organotin-free catalyst was contained.

(Examples 5 and 6 and Comparative Example 6)

100 parts by weight of the polymer (A-4) obtained in Synthesis Example 4 as the component (A), 200 parts by weight of surface-treated ground calcium carbonate (HUBERCARB Q3T, manufactured by J. M. Huber Corporation) and 10 parts by weight of titanium oxide (Ti-Pure R-902, manufactured by DuPont) as the components (C), 70 parts by weight of a phthalate-type plasticizer (JAYFLEX DIUP, manufactured by Exxon Mobil Chemical Company), 20 parts by weight of a thixotropic agent (Crayvallac Super, manufactured by CRAY VALLEY), 1 part by weight of an ultraviolet absorber (TINUVIN 327, manufactured by Ciba Specialty Chemicals), 1 part by weight of a light stabilizer (Sanol LS-770, manufactured by Sankyo Co., Ltd.), 5 parts by weight of stearic acid monoglyceride (EXCEL T-95, manufactured by Kao Corporation) as a physical property modifier, 2 parts by weight of a crosslinking agent (Methyl Silicate 51, manufactured by FUSO CHEMICAL Co., Ltd.), 2 parts by weight of vinyltrimethoxysilane (A-171, manufactured by Dow Corning Toray Co., Ltd.) as a dehydration agent, and 3 parts by weight of N-(β-aminoethyl)-γ-aminopropyltrimethoxysilane (A-1120, manufactured by Dow Corning Toray Co., Ltd.) as the component (D) were mixed and kneaded together under dehydration condition. Finally, stannous neodecanoate (Neostann U-50, manufactured by Nitto Kasei Co., Ltd.) as the component (B) and 3-diethylaminopropylamine (manufactured by Wako Pure Chemical Industries, Ltd.) as the component (E) were added in accordance with the formulation shown in Table 2 and then the obtained mixture was mixed followed by being air-tightly stored in a water-proof container to obtain a one package curable composition. The produced one package curable composition was subjected to evaluations for the water content in the composition, curability (time required for skinning), and adhesion in the same manner as above-mentioned. In this regard, however, adhesion was evaluated by using a stainless steel plate, a hard polyvinyl chloride, an ABS resin and an FRP as the adherends, and evaluated after aging at 23°C for 14 days. Evaluation was carried out on the basis of failure modes as follows: the state where the cohesive failure ratio was from 80% or higher to 100% was determined as A, the state where it was from 20% or higher to lower than 80% was determined as B, and the state where it was from 0% to lower than 20% was determined as C.

Table 2 shows the compositions of Examples 5 and 6 and Comparative Example 6, the total amount (mmol) of carbonyl group composing an acid group in the component (B) per 100 g of the component (A), water content (ppm) in each composition, curability (time required for skinning), and evaluation results of adhesion.

Table 2

| Composition (parts by weight) | | Example | | Comparative Example |
|---|---|---|---|---|
| | | 5 | 6 | 6 |
| Component (A) | A-4 | 100 | 100 | 100 |
| Component (C) | HUBERCARB Q3T | 200 | 200 | 200 |
| | Ti-Pure R-902 | 10 | 10 | 10 |
| Plasticizer | JAYFLEX DIUP | 70 | 70 | 70 |
| Thixotropic agent | Crayvallac Super | 20 | 20 | 20 |
| Ultraviolet absorber | TINUVIN 327 | 1 | 1 | 1 |
| Light stabilizer | Sanol LS 770 | 1 | 1 | 1 |
| Physical property modifier | Excel T-95 | 5 | 5 | 5 |
| Crosslinking agent | Methyl silicate 51 | 2 | 2 | 2 |
| Dehydration agent | A-171 | 2 | 2 | 2 |
| Component (D) | A-1120 | 3 | 3 | 3 |
| Component (B) | Neostann U-50 | 1.7 | 1.7 | 3.4 |
| Component (E) | 3-Diethylaminopropylamine | 0.25 | 1 | 0.5 |

(continued)

| Composition (parts by weight) | | Example | | Comparative Example |
|---|---|---|---|---|
| | | 5 | 6 | 6 |
| Total amount (mmol) of carbonyl group composing acid group in component (B) per 100 g of component (A) | | 7.3 | 7.3 | 14.7 |
| Dehydration of composition | | Yes | Yes | Yes |
| Water content in composition (ppm) | | 550 | 650 | 600 |
| Curability | Time required for skinning (min) | 160 | 160 | 85 |
| Adhesion | Stainless steel plate | B | A | C |
| | Hard polyvinyl chloride | A | A | B |
| | ABS resin | A | A | C |
| | FRP | A | A | B |

As shown in Table 2, each of the one package curable compositions (Examples 5 and 6) containing the aminosilane coupling agent of the component (D), and having a low water content (2,000 ppm or lower) in each composition, and total amount of carbonyl group composing an acid group in the component (B) per 100 g of the component (A) of 12 mmol or lower were found to show good adhesion to the respective adherends even though the organotin-free catalyst was contained.

## Claims

**1.** A one package curable composition which comprises:

(A) an organic polymer having a silicon-containing group capable of crosslinking by forming a siloxane bond;
(B) (b1) a metal salt of a carboxylic acid in which the carbon atom adjacent to the carbonyl group composing an acid group is a quaternary carbon and/or (b2) a carboxylic acid in which the carbon atom adjacent to the carbonyl group composing an acid group is a quaternary carbon;
(C) a filler; and
(D) an amino group-containing silane coupling agent;

wherein the curable composition:

- has a total amount of carbonyl group composing an acid group in the component (B) per 100 g of the component (A) of 0.5 to 11 mmol;
- contains no organotin compound; and
- has a water content of 2,000 ppm or lower.

**2.** The one package curable composition according to Claim wherein the component (B) is the carboxylic acid metal salt (b1) or the carboxylic acid (b2).

**3.** The one package curable composition according to Claim wherein the component (B) is the carboxylic acid metal salt (b1) and the carboxylic acid (b2).

**4.** The one package curable composition according to any one of Claims 1 to 3 wherein the organic polymer of the component (A) is one or more polymers selected from the group consisting of a polyoxyalkylene polymer, a saturated hydrocarbon polymer, and a (meth)acrylic ester polymer.

**5.** The one package curable composition according to Claim 4 wherein the polyoxyalkylene polymer is a polyoxypropylene polymer.

**6.** The one package curable composition according to any one of Claims 1 to 5 wherein the organic polymer of the component (A) has a main chain skeleton containing a group represented by the general formula (1) :

$$-NR^1-C(=O)- \qquad (1)$$

wherein $R^1$ denotes a hydrogen atom or a substituted or unsubstituted organic group.

**7.** The one package curable composition according to any one of Claims 1 to 6 wherein the carboxylic acid metal salt of the component (b-2) is one or more species selected from tin carboxylate, lead carboxylate, bismuth carboxylate, potassium carboxylate, calcium carboxylate, barium carboxylate, titanium carboxylate, zirconium carboxylate, hafnium carboxylate, vanadium carboxylate, manganese carboxylate, iron carboxylate, cobalt carboxylate, nickel carboxylate, and cerium carboxylate.

**8.** The one package curable composition according to Claims 7 wherein the component (b-2) is a tin carboxylate.

**9.** The one package curable composition according to Claim 8 wherein the component (b-2) is a stannous carboxylate.

**10.** The one package curable composition according to any one of Claims 1 to 9 which further comprises an amine compound as the component (E).

**11.** The one package curable composition according to any one of claims 1 to 10 which further comprises a phthalic acid ester plasticizer.

**Patentansprüche**

**1.** Härtbare Einkomponentenzusammensetzung, die umfasst:

(A) ein organisches Polymer mit einer siliziumhaltigen Gruppe, die durch Bilden einer Siloxanbindung quervernetzen kann,
(B) (b1) ein Metallsalz einer Carboxylsäure, in der das Kohlenstoffatom benachbart zu der eine Säuregruppe bildenden Carbonylgruppe ein quaternärer Kohlenstofif ist, und/oder (b2) eine Carboxylsäure, in der das Kohlenstoff benachbart zu der eine Säuregruppe bildenden Carbonylgruppe ein quaternärer Kohlenstoff ist,
(C) einen Füllstoff und
(D) ein aminogruppenhaltiges Silankopplungsmittel,

wobei die härtbare Zusammensetzung,

- eine Gesamtmenge einer eine Säuregruppe bildenden Carbonylgruppe in der Komponente (B) von 0,5 bis 11 mmol pro 100 g der Komponente (A) aufweist,
- keine zinnorganische Verbindung enthält und
- einen Wassergehalt von 2.000 ppm oder weniger aufweist.

**2.** Härtbare Einkomponentenzusammensetzung nach Anspruch 1, wobei die Komponente (B) das Carboxylsäuremetallsalz (b1) oder die Carboxylsäure (b2) ist.

**3.** Härtbare Einkomponentenzusammensetzung nach Anspruch 1, wobei die Komponente (B) das Carboxylsäuremetallsalz (b1) und die Carboxylsäure (b2) ist.

**4.** Härtbare Einkomponentenzusammensetzung nach einem der Ansprüche 1 bis 3, wobei das organische Polymer der Komponente (A) ein oder mehrere Polymer/e ist, das/die aus der aus einem Polyoxyalkylenpolymer, einem gesättigten Kohlenwasserstofifpolymer und einem (Meth)acrylesterpolymer bestehenden Gruppe ausgewählt ist/sind.

5. Härtbare Einkomponentenzusammensetzung nach Anspruch 4, wobei das Polyoxyalkylenpolymer ein Polyoxypropylenpolymer ist.

6. Härtbare Einkomponentenzusammensetzung nach einem der Ansprüche 1 bis 5, wobei das organische Polymer der Komponente (A) ein Hauptkettenskelett aufweist, das eine Gruppe enthält, die durch die allgemeine Formel (1) dargestellt wird:

$$-NR^1-C(=O)- \qquad (1)$$

wobei $R^1$ ein Wasserstoffatom oder eine substituierte oder unsubstituierte organische Gruppe darstellt.

7. Härtebare Einkomponentenzusammensetzung nach einem der Ansprüche 1 bis 6, wobei das Carboxylsäuremetallsalz der Komponente (b-2) eine oder mehrere Spezies ist, die aus Zinncarboxylat, Bleicarboxylat, Wismuthcarboxylat, Kaliumcarboxylat, Calciumcarboxylat, Bariumcarboxylat, Titancarboxylat, Zirkoniumcarboxylat, Hafniumcarboxylat, Vanadiumcarboxylat, Mangancarboxylat, Eisencarboxylat, Kobaltcarboxylat, Nickelcarboxylat und Cercarboxylat ausgewählt ist/sind.

8. Härtbare Einkomponentenzusammensetzung nach Anspruch 7, wobei die Komponente (b-2) ein Zinncarboxylat ist.

9. Härtbare Einkomponentenzusammensetzung nach Anspruch 8, wobei die Komponente (b-2) ein Stannocarboxylat ist.

10. Härtbare Einkomponentenzusammensetzung nach einem der Ansprüche 1 bis 9, die ferner eine Aminverbindung als die Komponente (E) umfasst.

11. Härtbare Einkomponentenzusammensetzung nach einem der Ansprüche 1 bis 10, die ferner ein Phthalatsäureesterweichmacher umfasst.

## Revendications

1. Composition durcissable en un paquet laquelle comprend :

   (A) un polymère organique présentant un groupe contenant du silicium capable d'une réticulation par formation d'une liaison siloxane ;
   (B) (b1) un sel de métal d'un acide carboxylique dans lequel l'atome de carbone adjacent au groupe carbonyle composant un groupe acide est un carbone quaternaire et/ou (b2) un acide carboxylique dans lequel l'atome de carbone adjacent au groupe carbonyle composant un groupe acide est un carbone quaternaire ;
   (C) une charge ; et
   (D) un agent de couplage de silane contenant un groupe amino ;

   dans laquelle la composition durcissable :

   - présente une quantité totale de groupe carbonyle composant un groupe acide dans le constituant (B) pour 100 g du constituant (A) de 0,5 à 11 mmol ;
   - contient aucun composé d'organoétain ; et
   - présente une teneur en eau de 2 000 ppm ou inférieure.

2. Composition durcissable en un paquet selon la revendication 1, dans laquelle le constituant (B) est le sel de métal d'acide carboxylique (b1) ou l'acide carboxylique (b2).

3. Composition durcissable en un paquet selon la revendication 1, dans laquelle le constituant (B) est le sel de métal d'acide carboxylique (b1) et l'acide carboxylique (b2).

4. Composition durcissable en un paquet selon l'une quelconque des revendications 1 à 3, dans laquelle le polymère organique du constituant (A) est un ou plusieurs polymères choisis dans le groupe constitué

d'un polymère de polyoxyalkylène, d'un polymère hydrocarboné saturé, et d'un polymère d'ester (méth)acrylique.

**5.** Composition durcissable en un paquet selon la revendication 4, dans laquelle le polymère de polyoxyalkylène est un polymère de polyoxypropylène.

**6.** Composition durcissable en un paquet selon l'une quelconque des revendications 1 à 5, dans laquelle le polymère organique du constituant (A) présente un squelette de chaîne principale contenant un groupe représenté par la formule générale (1) :

$$-NR^1-C(=O)- \qquad (1)$$

dans laquelle $R^1$ indique un atome d'hydrogène ou un groupe organique substitué ou non substitué.

**7.** Composition durcissable en un paquet selon l'une quelconque des revendications 1 à 6, dans laquelle le sel de métal d'acide carboxylique du constituant (b-2) est une ou plusieurs espèces choisies parmi un carboxylate d'étain, un carboxylate de plomb, un carboxylate de bismuth, un carboxylate de potassium, un carboxylate de calcium, un carboxylate de baryum, un carboxylate de titane, un carboxylate de zirconium, un carboxylate d'hafnium, un carboxylate de vanadium, un carboxylate de manganèse, un carboxylate de fer, un carboxylate de cobalt, un carboxylate de nickel, et un carboxylate de cérium.

**8.** Composition durcissable en un paquet selon la revendication 7, dans laquelle le constituant (b-2) est un carboxylate d'étain.

**9.** Composition durcissable en un paquet selon la revendication 8, dans laquelle le constituant (b-2) est un carboxylate stanneux.

**10.** Composition durcissable en un paquet selon l'une quelconque des revendications 1 à 9, laquelle comprend de plus un composé d'amine comme le constituant (E).

**11.** Composition durcissable en un paquet selon l'une quelconque des revendications 1 à 10, laquelle comprend de plus un plastifiant d'ester d'acide phtalique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP SHO5273998 B
- JP SHO636041 B
- JP SHO559669 B
- JP 3062626 B
- JP HEI6322251 B
- JP HEI5117519 B
- JP HEI8413582 B
- JP HEI539428 B
- JP 2001342363 A
- JP 2000313814 A
- JP 2002285018 A
- JP 2003147220 A
- JP 2000345054 A
- JP 2003206410 A
- JP HEI347825 B
- JP SHO61215623 B
- JP SHO4627250 B
- JP SHO5915336 B
- US 3278457 A
- US 3278458 A
- US 3278459 A
- US 3427256 A
- US 3427334 A
- US 3427335 A
- JP HEI10273512 B
- JP HEI11060722 B
- JP SHO4536319 B
- JP SHO4612154 B
- JP SHO50156599 B
- JP SHO546096 B
- JP SHO5513767 B
- JP SHO5513468 B
- JP SHO57164123 B
- JP HEI32450 B
- US 3632557 A
- US 4345053 A
- US 4366307 A
- US 4960844 A
- JP SHO61197631 B
- JP SHO61215622 B
- JP SHO61218632 B
- JP HEI372527 B
- JP HEI8231707 B
- JP HEI469659 B
- JP HEI7108928 B
- JP SHO63254149 B
- JP SHO6422904 B
- JP HEI1197509 B
- JP 2539445 B
- JP 2873395 B
- JP HEI753882 B
- JP HEI314068 B
- JP HEI455444 B
- JP HEI6211922 B
- JP HEI9272714 B
- JP SHO59122541 B
- JP SHO63112642 B
- JP HEI6172631 B
- JP HEI1116763 B
- JP HEI1168764 B
- JP 2000186176 A
- JP SHO5978223 B
- JP SHO59168014 B
- JP SHO60228516 B
- JP SHO60228517 B
- JP SHO58109529 B
- US 4374237 A
- JP SHO6213430 B
- US 4645816 A
- JP HEI853528 B
- EP 0676403 O
- JP HEI10204144 B
- JP 0831108 O
- JP 2003508561 A
- US 6197912 B
- JP HEI6211879 B
- US 5364955 A
- JP HEI1053637 B
- US 5756751 A
- JP HEI11100427 B
- JP 2000169544 A
- JP 2000169545 A
- JP 2002212415 A
- JP 3313360 B
- US 4067844 A
- US 3711445 A
- JP 2001323040 A
- JP HEI11279249 B
- US 5990257 A
- JP 2000119365 A
- US 6046270 A
- JP SHO5829818 B
- US 5068304 A
- JP HEI1160724 B
- JP 2002155145 A
- JP 2002249538 A
- WO 03018658 A
- WO 03059981 A

- JP 2001207157 A
- US 5364956 A
- EP 0831108 O
- JP 2001181532 A
- JP HEI11302527 B
- JP 2000038560 A
- JP 2004051701 A
- JP 2004066749 A
- JP HEI5117521 B
- JP HEI11241029 B
- JP HEI7258534 B
- JP HEI6279693 B
- JP HEI11349916 B
- JP 2003155389 A
- JP HEI3160053 B
- JP HEI4283259 B
- JP 9194731 A
- JP HEI9194731 B
- JP HEI570531 B
- JP 2001072854 A

**Non-patent literature cited in the description**


- J. Polymer Sci. **J.P. KENNEDY et al.** Polymer Chem. 1997, vol. 15, 2843
- **MATYJASZEWSKI et al.** *J. Am. Chem. Soc.,* 1995, vol. 117, 5614
- Kankosei Jushi (Photosensitive Resins). Insatsu Gakkai Shuppanbu, 17 March 1972, 93 ff, , 106 ff, , 117 ff